# EUROPEAN PATENT APPLICATION

(11) **EP 4 391 629 A1**
(43) Date of publication of application: **26.06.2024**
(21) Application number: 22874808.3
(22) Date of filing: 24.09.2022
(51) Int. Cl.: H04W 24/02

(54) **COMMUNICATION METHOD AND RELATED DEVICE**

(30) Priority: 30.09.2021 CN 202111166903
(71) Applicant: Huawei Technologies Co., Ltd., Shenzhen, Guangdong 518129 (CN)
(72) Inventor: HE, Qingchun, Shenzhen, Guangdong 518129 (CN); YU, Youyang, Shenzhen, Guangdong 518129 (CN); CHENG, Xingqing, Shenzhen, Guangdong 518129 (CN); LI, Mingchao, Shenzhen, Guangdong 518129 (CN)
(74) Representative: Pfenning, Meinig & Partner mbB
(86) International application number: PCT/CN2022/121141
(87) International publication number: WO 2023/051422

(57) **Abstract**

A communication method and a related device are provided and relate to the communication field. The communication method includes: obtaining first information of a first node in a first communication system, where the first information includes status information of the first node and/or status information of a first link, and the first node is an end of the first link; and sending the first information to a first functional entity in a second communication system in a first manner. According to the communication method, a functional entity in the second communication system may obtain information of a node in the first communication system, so that the second communication system can perceive and manage the node in the first communication system, to improve effect of converging the first communication system and the second communication system.

## Description

This application claims priority to Chinese Patent Application No. 202111166903.3, filed with the China National Intellectual Property Administration on September 30, 2021 and entitled "COMMUNICATION METHOD AND RELATED DEVICE", which is incorporated herein by reference in its entirety.

### TECHNICAL FIELD

This application relates to the communication field, and in particular, to a communication method and a related device.

### BACKGROUND

In existing short-range wireless communication, there are generally a grant node and a terminal node. The grant node may be referred to as a G node, and the terminal node may be referred to as a T node. The G node and the T node that communicate with each other may form a short-range communication domain. The G node is a node, in an access stratum of a short-range wireless communication system, for sending data scheduling information, and provides access stratum services such as connection management, resource allocation, and information security for the T node in the communication domain. There is low power consumption between the nodes in the short-range communication domain, with low costs, but a communication range is relatively limited. Bluetooth, Wi-Fi, and the like may be referred to as a short-range wireless communication technology.

Compared with short-range wireless communication, a long-range communication system, for example, a 5G cellular network, may provide macro coverage and a service for a user terminal within the macro coverage. If the short-range communication domain and a cellular network communication system can be converged (the short-range communication domain and the cellular network communication system that are converged are referred to as a converged communication system for short, and the converged communication system is used hereinafter), it is possible for a terminal to implement long-range data transmission at low costs. However, in an existing converged communication system, it is difficult to manage a node in a short-range communication domain. Consequently, it is difficult to converge the short-range communication domain with a cellular network communication system.

How to resolve the problem is a research focus among persons skilled in the art.

### SUMMARY

This application provides a communication method and a related device, to report information of a first node in a first communication system, thereby satisfying a requirement for managing the first node, and improving effect of converging the first communication system and a second communication system.

According to a first aspect, a communication method is provided, and includes the following steps: obtaining first information of a first node in a first communication system, where the first information includes status information of the first node and/or status information of a first link, and the first node is an end of the first link; and sending the first information to a first functional entity in a second communication system in a first manner.

Optionally, the foregoing method may be applied to the first node.

In this embodiment of this application, a functional entity in the second communication system may obtain information of a node in the first communication system, so that the second communication system can perceive and manage the node in the first communication system.

The information of the first node may include the status information of the first node, the status information of the first link, or the like. Correspondingly, the functional entity in the second communication system may manage a node status, a communication link status detection policy, or the like. Therefore, a requirement of the second communication system for managing the node in the first communication system can be satisfied, to improve effect of converging the first communication system and the second communication system, and satisfy a requirement of a user on converging different communication systems.

For example, the first communication system may be a short-range wireless communication system, and the second communication system may be a 5G core network. According to this embodiment of this application, the 5G core network can perceive a node in the short-range wireless communication system, and further manage the node, so that the node in the short-range communication system can implement low-cost and long-range data transmission, to improve effect of converging the short-range wireless communication system and the 5G core network and service quality, and bring better user experience on communication to a user.

In a possible implementation of the first aspect, the status information of the first node is information related to the first node. For example, the status information of the first node includes one or more of the following: hardware version information, software version information, or node power information.

In a possible implementation of the first aspect, the status information of the first link is information related to a link status of the first link. For example, the status information of the first link includes a first status measurement quantity and/or a second status measurement quantity. The first status measurement quantity is a measurement quantity of a status of a link between the first node and a grant node of the first node, and the second status measurement quantity is a measurement quantity of a status of a link between the first node and the second communication system. The measurement quantity of the status of the link between the first node and the second communication system may be a measurement quantity of a status of a link between the first node and the first functional entity, a measurement quantity of a status of a link between the first node and the third functional entity, and/or the like.

In a possible implementation of the first aspect, the first status measurement quantity includes one or more of the following: a reference signal received power RSRP, reference signal received quality RSRQ, a signal-to-interference plus noise ratio SINR, a channel quality indicator CQI value, a precoding matrix indicator PMI value, or a rank indicator RI value.

In a possible implementation of the first aspect, the second status measurement quantity includes one or more of the following: an end-to-end round-trip time RTT, a packet loss rate, or a jitter amount.

In another possible implementation of the first aspect, the communication method further includes: receiving control policy information from the first functional entity, where the control policy information is used to configure the first node.

In this embodiment of this application, the first functional entity can perform information configuration for the first node by delivering the control policy information. Further, the control policy information includes at least one of the following: node status update information, quality of service QoS policy configuration information, a node status report policy, or a link status detection policy. The node status update information is related update information corresponding to the status information of the first node. The node status report policy is a report policy corresponding to the status information of the first node. Optionally, the node status report policy includes one or more of the following: an object to be reported, a report periodicity, or an event parameter. The link status detection policy is a detection policy corresponding to the status information of the first link. Optionally, the link status detection policy includes one or more of the following: an object to be measured, an object to be reported, a report threshold, a report periodicity, or an event parameter. The QoS policy configuration information is used to configure a QoS policy of the first node.

In another possible implementation of the first aspect, the communication method in this embodiment of this application further includes: receiving sending manner indication information, where the sending manner indication information indicates the first manner. In this embodiment of this application, the sending manner indication information is sent, to determine the first manner of sending the first information to the first functional entity.

In another possible implementation of the first aspect, the first manner is a control plane sending manner. In this case, the sending the first information to a first functional entity in a second communication system in a first manner includes: sending a non-access stratum NAS message to a second functional entity in the second communication system, where the NAS message includes the first information.

In this embodiment of this application, when the first manner is the control plane sending manner, the NAS message is sent to the second functional entity, where the NAS message includes the first information, so that the second functional entity may send the first information to the first functional entity.

In another possible implementation of the first aspect, the first manner is a user plane sending manner based on the first functional entity. In this case, the sending the first information to a first functional entity in a second communication system in a first manner includes: establishing an internet protocol IP connection to the first functional entity in the second communication system based on network identifier information of the first functional entity; and sending the first information to the first functional entity through the IP connection.

In this embodiment of this application, when the first manner is the user plane sending manner, the IP connection to the first functional entity is first established based on network identifier information of the first functional entity, and then the first information may be sent to the first functional entity based on the IP connection.

In another possible implementation of the first aspect, the communication method in this embodiment of this application further includes: sending a first request to the second functional entity in the second communication system, where the first request is used to request for the network identifier information of the first functional entity; and receiving the network identifier information of the first functional entity from the second functional entity.

In this embodiment of this application, the first request may be sent to the second functional entity, to request to obtain the network identifier information of the first functional entity.

In another possible implementation of the first aspect, the sending the first information to the first functional entity through the IP connection includes: sending the first information to the first functional entity according to a user plane data transmission protocol through the IP connection.

In this embodiment of this application, when the first information is sent to the first functional entity through the established IP connection, the first information may be encapsulated according to the user plane data transmission protocol, so that the first information can be successfully transmitted through a user plane.

In another possible implementation of the first aspect, the first manner is the performance measurement function PMF user plane sending manner. In this case, the sending the first information to a first functional entity in a second communication system in a first manner includes: sending the first information to a PMF unit of a third functional entity in the second communication system based on network identifier information of the PMF unit.

In this embodiment of this application, when the first manner is the PMF user plane sending manner, the first information is sent to the PMF unit of the third functional entity based on the network identifier information of the PMF unit, so that the first information can be sent to the first functional entity by using the PMF unit.

In another possible implementation of the first aspect, the communication method in this embodiment of this application further includes: sending a second request to the second functional entity in the second communication system, where the second request is used to request for the network identifier information of the PMF unit; and receiving the network identifier information of the PMF unit from the second functional entity.

In this embodiment of this application, the second request may be sent to the second functional entity to request to obtain the network identifier information of the PMF unit.

In another possible implementation of the first aspect, the sending the first information to a PMF unit includes: sending an end-to-end round-trip time RTT detection request message and/or a packet loss rate detection request message to the PMF unit, where the end-to-end round-trip time RTT detection request message or the packet loss rate detection request message includes the first information.

In this embodiment of this application, when the first information is sent to the PMF unit, the first information may be carried in the RTT detection request message or the packet loss rate detection request message, to send the first information to the PMF unit.

According to a second aspect, a communication method is further provided, and includes the following steps: receiving first information of a first node in a first communication system, where the first information includes status information of the first node and/or status information of a first link, and the first node is an end of the first link; and sending the first information to a first functional entity in a second communication system.

Optionally, the foregoing method may be applied to a second functional entity in the second communication system.

In this embodiment of this application, a functional entity in the second communication system may obtain information of a node in the first communication system, so that the second communication system can perceive and manage the node in the first communication system.

The information of the first node may include the status information of the first node, the status information of the first link, or the like. Correspondingly, the functional entity in the second communication system may manage a node status, a communication link status detection policy, or the like. Therefore, a requirement of the second communication system for managing the node in the first communication system can be satisfied, to improve effect of converging the first communication system and the second communication system, and satisfy a requirement of a user on converging different communication systems.

In a possible implementation of the second aspect, the communication method in this embodiment of this application further includes: receiving control policy information from the first functional entity, where the control policy information is used to configure the first node; and sending the control policy information to the first node.

In this embodiment of this application, the control policy information may be further delivered to the first node, to perform information configuration for the first node.

In a possible implementation of the second aspect, the receiving first information of a first node in a first communication system includes: receiving a NAS message from the first node, where the NAS message includes the first information.

In a possible implementation of the second aspect, the communication method in this embodiment of this application further includes: receiving a first request from the first node, where the first request is used to request for network identifier information of the first functional entity; and sending the network identifier information of the first functional entity.

In a possible implementation of the second aspect, the communication method in this embodiment of this application further includes: receiving a second request from the first node, where the second request is used to request for network identifier information of a PMF unit of a third functional entity in the second communication system; and sending the network identifier information of the PMF unit.

According to a third aspect, a communication method is further provided, and includes the following steps: receiving first information from a first node, where the first information includes status information of the first node and/or status information of a first link, and the first node is an end of the first link; determining control policy information of the first node based on the first information, where the control policy information is used to configure the first node; and sending the control policy information.

Optionally, the foregoing method may be applied to a first functional entity in a second communication system.

In this embodiment of this application, a functional entity in the second communication system may obtain the information of the first node in the first communication system, so that the second communication system can perceive and manage the node in the first communication system.

The information of the first node may include the status information of the first node, the status information of the first link, or the like. Correspondingly, the functional entity in the second communication system may manage a node status, a communication link status detection policy, or the like. Therefore, a requirement of the second communication system for managing the node in the first communication system can be satisfied, to improve effect of converging the first communication system and the second communication system, and satisfy a requirement of a user on converging different communication systems.

In a possible implementation of the third aspect, the status information of the first node includes one or more of the following: hardware version information, software version information, or node power information.

In a possible implementation of the third aspect, the control policy information includes one or more of the following: node status update information, quality of service QoS policy configuration information, a node status report policy, or a link status detection policy.

In a possible implementation of the third aspect, the node status report policy includes one or more of the following: an object to be reported, a report periodicity, or an event parameter.

In a possible implementation of the third aspect, the link status detection policy includes one or more of the following: an object to be measured, an object to be reported, a report threshold, a report periodicity, or an event parameter.

In another possible implementation of the third aspect, the communication method in this embodiment of this application further includes: sending sending manner indication information, where the sending manner indication information indicates a first manner, and the first manner is a manner of sending the first information.

According to a fourth aspect, a first node is further provided, and includes an obtaining module, configured to obtain first information of the first node in a first communication system, where the first information includes status information of the first node and/or status information of a first link, and the first node is an end of the first link; and a sending module, configured to send the first information to a first functional entity in a second communication system in a first manner.

In a possible implementation of the fourth aspect, the status information of the first node includes one or more of the following: hardware version information, software version information, or node power information.

In a possible implementation of the fourth aspect, the status information of the first link includes a first status measurement quantity and/or a second status measurement quantity. The first status measurement quantity is a measurement quantity of a status of a link between the first node and a grant node of the first node, and the second status measurement quantity is a measurement quantity of a status of a link between the first node and the second communication system.

In a possible implementation of the fourth aspect, the first status measurement quantity includes one or more of the following: a reference signal received power RSRP, reference signal received quality RSRQ, a signal-to-interference plus noise ratio SINR, a channel quality indicator CQI value, a precoding matrix indicator PMI value, or a rank indicator RI value.

In a possible implementation of the fourth aspect, the second status measurement quantity includes one or more of the following: an end-to-end round-trip time RTT, a packet loss rate, or a jitter amount.

In another possible implementation of the fourth aspect, the first node in this embodiment of this application further includes a receiving module, configured to receive control policy information from the first functional entity, where the control policy information is used to configure the first node.

In another possible implementation of the fourth aspect, the control policy information includes one or more of the following: node status update information, quality of service QoS policy configuration information, a node status report policy, or a link status detection policy.

In a possible implementation of the fourth aspect, the node status report policy includes one or more of the following: an object to be reported, a report periodicity, or an event parameter.

In another possible implementation of the fourth aspect, the link status detection policy includes one or more of the following: an object to be measured, an object to be reported, a report threshold, a report periodicity, or an event parameter.

In another possible implementation of the fourth aspect, the receiving module is further configured to receive sending manner indication information, where the sending manner indication information indicates the first manner.

In another possible implementation of the fourth aspect, the first manner is a control plane sending manner, and for sending the first information to the first functional entity in the second communication system in the first manner, the sending module is specifically configured to send a non-access stratum NAS message to a second functional entity in the second communication system, where the NAS message includes the first information.

In another possible implementation of the fourth aspect, the first manner is a user plane sending manner based on the first functional entity, and for sending the first information to the first functional entity in the second communication system in the first manner, the sending module is specifically configured to: establish an internet protocol IP connection to the first functional entity in the second communication system based on network identifier information of the first functional entity; and send the first information to the first functional entity through the IP connection.

In another possible implementation of the fourth aspect, the sending module is further configured to send a first request to the second functional entity in the second communication system, where the first request is used to request for the network identifier information of the first functional entity; and the receiving module is further configured to receive the network identifier information of the first functional entity from the second functional entity.

In another possible implementation of the fourth aspect, for sending the first information to the first functional entity through the IP connection, the sending module is specifically configured to send the first information to the first functional entity according to a user plane data transmission protocol through the IP connection.

In another possible implementation of the fourth aspect, the first manner is a performance measurement function PMF user plane sending manner, and for sending the first information to the first functional entity in the second communication system in the first manner, the sending module is specifically configured to send the first information to a PMF unit of a third functional entity in the second communication system based on network identifier information of the PMF unit.

In another possible implementation of the fourth aspect, the sending module is further configured to send a second request to the second functional entity in the second communication system, where the second request is used to request for the network identifier information of the PMF unit; and the receiving module is further configured to receive the network identifier information of the PMF unit from the second functional entity.

In another possible implementation of the fourth aspect, for sending the first information to the PMF unit, the sending module is specifically configured to send an end-to-end round-trip time RTT detection request message and/or a packet loss rate detection request message to the PMF unit, where the end-to-end round-trip time RTT detection request message or the packet loss rate detection request message includes the first information.

The first node in the fourth aspect is used, and the information of the first node can be reported, to implement refined management of the first node, and improve resource utilization.

According to a fifth aspect, a first functional entity is further provided, and includes a receiving module, configured to receive first information from a first node, where the first information includes status information of the first node and/or status information of a first link, and the first node is an end of the first link; a determining module, configured to determine control policy information of the first node based on the first information, where the control policy information is used to configure the first node; and a sending module, configured to send the control policy information.

In a possible implementation of the fifth aspect, the status information of the first node includes one or more of the following: hardware version information, software version information, or node power information.

In a possible implementation of the fifth aspect, the control policy information includes one or more of the following: node status update information, quality of service QoS policy configuration information, a node status report policy, or a link status detection policy.

In a possible implementation of the fifth aspect, the node status report policy includes one or more of the following: an object to be reported, a report periodicity, or an event parameter.

In a possible implementation of the fifth aspect, the link status detection policy includes one or more of the following: an object to be measured, an object to be reported, a report threshold, a report periodicity, or an event parameter.

In another possible implementation of the fifth aspect, the sending module is further configured to send sending manner indication information, where the sending manner indication information indicates a first manner, and the first manner is a manner of sending the first information.

The first functional entity provided in the fifth aspect is used, and the information of the first node can be reported, to implement refined management of the first node, and improve resource utilization.

According to a sixth aspect, a second functional entity is further provided, and includes a receiving module, configured to receive first information of a first node in a first communication system, where the first information includes status information of the first node and/or status information of a first link, and the first node is an end of the first link; and a sending module, configured to send the first information to a first functional entity in a second communication system.

In a possible implementation of the sixth aspect, the receiving module is further configured to receive control policy information from the first functional entity, where the control policy information is used to configure the first node; and the sending module is further configured to send the control policy information to the first node.

In a possible implementation of the sixth aspect, for receiving the first information of the first node in the first communication system, the receiving module is specifically configured to receive a NAS message from the first node, where the NAS message includes the first information.

In a possible implementation of the sixth aspect, the receiving module is further configured to: receive a first request from the first node, where the first request is used to request for network identifier information of the first functional entity; and send the network identifier information of the first functional entity.

In a possible implementation of the sixth aspect, the receiving module is further configured to: receive a second request from the first node, where the second request is used to request for network identifier information of a PMF unit of a third functional entity in the second communication system; and send the network identifier information of the PMF unit.

The second functional entity provided in the sixth aspect is used, and the information of the first node can be reported, to implement refined management of the first node, and improve resource utilization.

According to a seventh aspect, a communication apparatus is further provided, and includes at least one processor and a communication interface. The communication interface provides information input or information output for the at least one processor, and the at least one processor is configured to execute a program or instructions, to enable the communication apparatus to implement the communication method according to any one of the first aspect, the second aspect, and the third aspect.

According to an eighth aspect, a terminal is further provided. The terminal includes the communication apparatus according to the seventh aspect.

Examples of some terminals include but are not limited to: a smart household device (for example, a television, a sweeping robot, a smart desk lamp, a sound system, a smart lighting system, an electrical apparatus control system, home background music, a home theater system, an intercom system, or video surveillance), a smart transportation device (for example, a car, a ship, a drone, a train, a truck, or a truck), a smart manufacturing device (for example, a robot, industrial equipment, smart logistics, or a smart factory), a smart terminal (a mobile phone, a computer, a tablet computer, a palmtop computer, a desktop computer, a headset, an acoustic device, a wearable device, an in-vehicle device, a virtual reality device, an augmented reality device, or the like), a battery management system, and a battery.

According to a ninth aspect, a computer-readable storage medium is further provided. The computer-readable storage medium stores a computer program, and the computer program is executed by a processor to implement the communication method according to the first aspect, implement the communication method according to the second aspect, or implement the communication method according to the third aspect.

According to a tenth aspect, a computer program product including an instruction is further provided. When the computer program product is run on a computer, the computer is enabled to perform the communication method according to the first aspect, perform the communication method according to the second aspect, or perform the communication method according to the third aspect.

For beneficial effect of some implementations of the technical solutions provided in the second aspect to the tenth aspect of this application, refer to beneficial effect of the technical solutions in the first aspect. Details are not described herein again.

### BRIEF DESCRIPTION OF DRAWINGS

The accompanying drawings used in embodiments of this application are described below.
FIG. 1a and FIG. 1b are schematic diagrams of structures of a first communication system and a second communication system according to an embodiment of this application;
FIG. 2 is a flowchart of interaction in a communication method according to an embodiment of this application;
FIG. 3 is a schematic diagram of a transmission protocol stack for a control plane sending manner according to an embodiment of this application;
FIG. 4 is a flowchart of detailed interaction in a communication method according to an embodiment of this application;
FIG. 5 is a schematic diagram of a transmission protocol stack for a user plane sending manner according to an embodiment of this application;
FIG. 6 is a flowchart of detailed interaction in another communication method according to an embodiment of this application;
FIG. 7 is a flowchart of PDU session establishment in a conventional technology;
FIG. 8 is a schematic diagram of a transmission protocol stack for a PMF user plane sending manner according to an embodiment of this application;
FIG. 9 is a flowchart of detailed interaction in still another communication method according to an embodiment of this application;
FIG. 10 is a schematic diagram of structures of another first communication system and another second communication system according to an embodiment of this application;
FIG. 11 is a schematic diagram of a structure of a first node according to an embodiment of this application;
FIG. 12 is a schematic diagram of a structure of a first functional entity according to an embodiment of this application;
FIG. 13 is a schematic diagram of a structure of a second functional entity according to an embodiment of this application; and
FIG. 14 is a schematic diagram of a structure of a communication apparatus according to an embodiment of this application.

### DESCRIPTION OF EMBODIMENTS

Technical solutions of this application are described below with reference to the accompanying drawings. Unless otherwise defined, all technical and scientific terms used in this specification have same meanings as those usually understood by persons skilled in the art related to this application. In case of any inconsistency, it is subject to the meaning described in this specification or the meaning obtained based on content recorded in this specification. In addition, the terms used in this specification are merely for the purpose of describing embodiments of this application, but are not intended to limit this application.

For ease of understanding, some concepts related to embodiments of this application are described for reference by using examples below. Details are as follows:

A communication system in this application includes a global system for mobile communication (global system for mobile communication, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (Worldwide Interoperability for Microwave Access, WiMAX) communication system, a fifth-generation (5th generation, 5G) cellular communication system or a millimeter wave communication system, for example, new radio (New Radio, NR), a sixth-generation (6th generation, 6G) system, various existing short-range communication systems (such as Bluetooth, Wi-Fi, an in-vehicle universal short-range wireless communication system, and a SparkLink short-range communication system), a future evolved short-range communication system, a universal short-range communication system, and the like.

A node in this application is an electronic device having a communication capability, and is also referred to as a communication node. For example, the node may include a standalone device, for example, a handheld terminal, a vehicle, an in-vehicle device, a network side device, user equipment, an access terminal, a subscriber unit, a subscriber station, a mobile station, a mobile console, a remote station, a remote terminal, a wireless communication device, a user agent, or a user apparatus, or may be a component (for example, a chip or an integrated circuit) included in the standalone device. The node may be any possible intelligent terminal device (for example, a mobile phone), intelligent transportation device (for example, a vehicle or an unmanned aerial vehicle), intelligent manufacturing device, a smart household device (for example, a large screen or a sound box), or the like. In a possible scenario, in a vehicle, the node may alternatively be a battery management system and a battery in a battery pack.

For example, when the node is an in-vehicle device, the node may be a cockpit domain (cockpit domain) device, or a module in a cockpit domain device, for example, one or more of modules of a cockpit domain controller (cockpit domain controller, CDC), a camera, a screen, a microphone, audio equipment, an electronic key, and a passive entry passive start system controller.

The node in this application may be used in the foregoing communication system. The node in embodiments of this application may be used in a plurality of application scenarios, for example, the following application scenarios: mobile internet (mobile internet, MI), industrial control (industrial control), self driving (self driving), transportation safety (transportation safety), internet of things (internet of things, IoT), smart city (smart city), smart home (smart home), or smart manufacturing.

In some application scenarios or for some network types, a name of a device having a similar communication capability may not be referred to as a node. However, for ease of description, every electronic device having a communication capability is referred to as a node in embodiments of this application.

Using a short-range communication system as an example, the short-range communication system includes a terminal node, a grant node, and a gateway node. The grant node may manage the terminal node, has a resource allocation function, and is responsible for allocating resources to the terminal node. The terminal node submits to scheduling of the grant node, and communicates with the grant node and/or another node by using the resources allocated by the grant node. The gateway node may be connected to the grant node, and is used as a communication bridge between the communication system and another communication system.

In some specific implementation scenarios, the grant node may also be referred to as a G node, a primary node, or a control node, and the terminal node may also be referred to as a T node or a secondary node. A communication link from the G node to the T node may be referred to as a C link or a downlink, and a communication link from the T node to the G node may be referred to as a T link or an uplink.

The foregoing exemplary descriptions of the concepts may be applied in the following embodiments.

In a system in which a short-range wireless communication system and a 5G cellular network are converged, to better perceive and manage a terminal node in the short-range wireless communication system, a 5G core network needs to obtain related information reported by the terminal node, to facilitate terminal node management and satisfy typical applications such as a smart manufacturing industry, an industrial field network, and manipulator motion control.

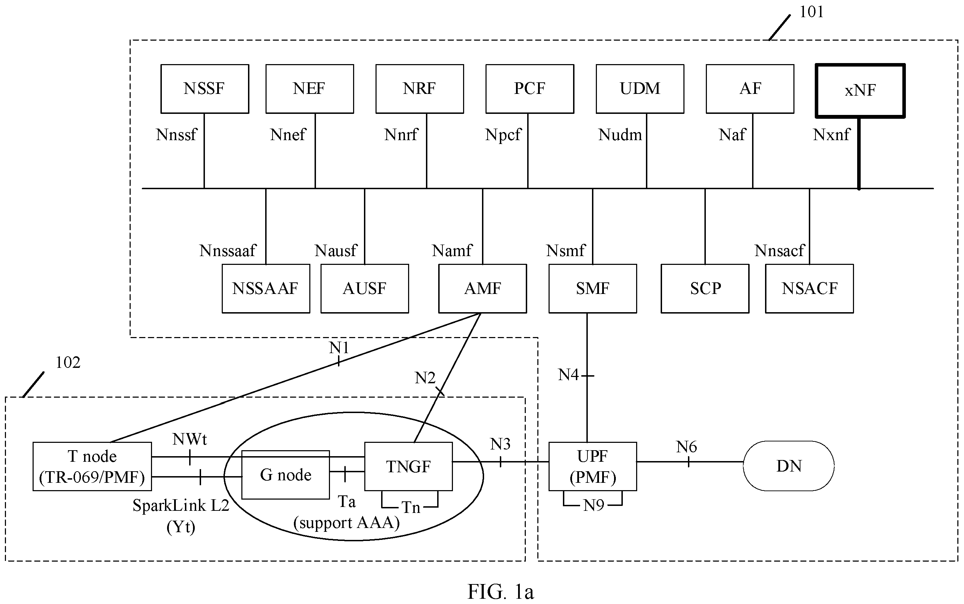

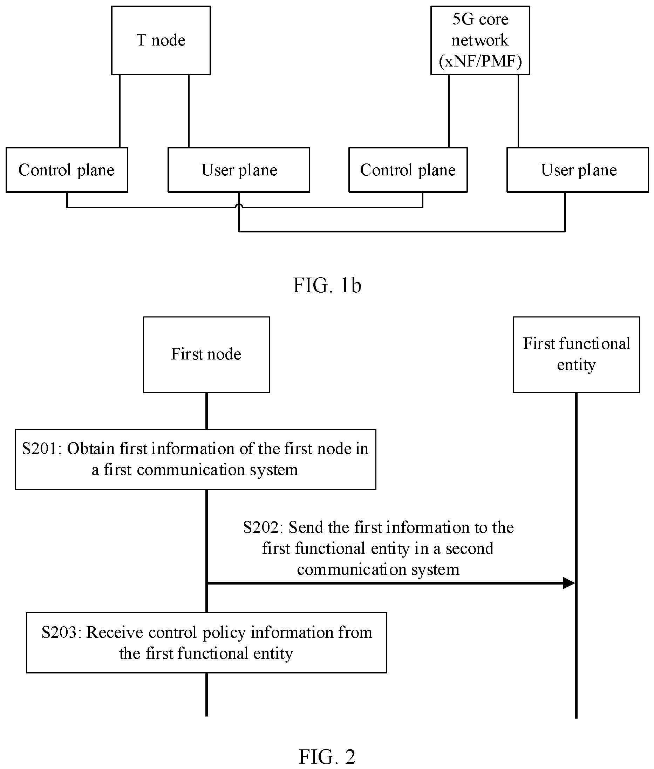

In view of the foregoing technical problem, this application provides a communication method, to report information of a first node, to satisfy a requirement on node management. The communication method in embodiments of this application is applied to a first communication system and a second communication system. The first communication system and the second communication system may be any one of the foregoing communication systems. Specifically, the first communication system may be any short-range communication system, and the second communication system may be another communication system with a communication range longer than that of the first communication system. FIG. 1a and FIG. 1b are schematic diagrams of structures of a first communication system and a second communication system according to an embodiment of this application. Refer to FIG. 1a. In embodiments of this application, for example, the first communication system is a short-range communication system 102 (for example, a universal short-range communication system), and the second communication system is a 5G cellular communication system 101, to describe the foregoing communication method in detail. It should be noted that the communication method in embodiments of this application is not limited to being applied to a short-range communication system or a 5G cellular communication system.

Specifically, the short-range communication system 102 in FIG. 1a includes a T node, a G node, and a gateway node TNGF. The T node and the G node communicate with each other through an L2 interface in a SparkLink (SparkI,ink) short-range communication system. The T node further communicates with the gateway node TNGF through an NWt interface. The G node and the gateway node TNGF communicate with each other through a Ta interface.

More specifically, in FIG. 1a, the T node is a terminal node in the short-range communication system. A basic service stratum of the T node has a 5G convergence functional unit, and the 5G convergence functional unit supports a non-access stratum (non-access stratum, NAS) function. The T node is responsible for the following functions:
accessing a 5G core network through a trusted short-range access network;
measuring and reporting a status of a short-range communication system based on a configuration of the 5G core network, where the status includes a status of a T node and a link status of a link on which the T node is located, and the link on which the T node is located includes a link between the T node and the G node or a link between the T node and the 5G core network; and
performing service interworking based on a quality of service (Quality of Service, QoS) policy configuration of the 5G core network.

It should be understood that, the exemplary description of the functions of the T node above is provided only for ease of understanding, and is not intended to limit the T node. In a specific implementation process, there may be more or fewer functions that the T node is responsible for based on an actual case.

The G node in FIG. 1a is a G node authenticated by the 5G core network, that is, a grant node, of a short-range communication system, deployed by a carrier. The G node is a node, in an access stratum of the short-range communication system, for sending data scheduling information, and provides access stratum services such as connection management, resource allocation, and information security for the T node covered by the G node. The G node may provide a short-range access service for a terminal node covered by the T node based on an indication of the 5G core network, and may establish a trusted connection to the 5G core network via the TNGF. A basic service stratum of the G node has a 5G convergence functional unit. The G node is responsible for the following functions:
providing a 5G convergence service, to enable the T node to perform service discovery and access;
performing identity authentication on the T node that supports a 5G convergence functi on;
measuring and reporting the status of the short-range communication system based on the configuration of the 5G core network;
allocating resources to and scheduling the resources for the T node covered by the G node based on a QoS policy configuration of the 5G core network;
providing an air interface data transmission service for the T node, for interaction between the T node and the TNGF, and control planes and user planes of the T node and the 5G core network;
allocating an IP address to the T node, for transmission and addressing of a control plane and a user plane of the short-range communication system;
during remote transmission, providing QoS policy configuration information related to data transmission of the short-range communication system for the T node; and
when the QoS policy configuration information for the T node is determined by the 5G core network, forwarding, to the T node, the QoS policy configuration information delivered by the 5G core network.

It should be understood that, the exemplary description of the functions of the G node above is provided only for ease of understanding, and is not intended to limit the T node. In a specific implementation process, there may be more or fewer functions that the G node is responsible for based on an actual case.

In addition, the gateway node TNGF in FIG. 1a is responsible for the following functions:
forwarding a NAS message between the T node and the 5G core network;
exchanging, with the T node, GTP-U tunnel information transmitted on a control plane and a user plane;
forwarding the QoS policy configuration information of the 5G core network to the T node, and providing a QoS information update;
providing a QoS policy configuration for short-range communication to the G node; and
supporting AAA, where AAA is short for authentication (Authentication), authorization (Authorization), and accounting (Accounting), and is a security management mechanism for access control in network security that provides three security services, namely, authentication, authorization, and accounting.

It should be understood that, the exemplary description of the functions of the gateway node TNGF above is provided only for ease of understanding, and is not intended to limit the T node. In a specific implementation process, there may be more or fewer functions that the gateway node TNGF is responsible for based on an actual case.

In FIG. 1a, the 5G cellular communication system 101 includes one or more of a network slice selection function (Network Slice Selection Function, NSSF) network element (a network element is a functional entity), a network exposure function (Network Exposure Function, NEF) network element, a network repository function (Network Repository Function, NRF) network element, a policy control function (Policy Control function, PCF) network element, a unified data management (Unified Data Management, UDM) network element, an application function (Application Function, AF) network element, a network slice-specific and SNPN authentication and authorization function (Network Slice-specific and SNPN Authentication and Authorization Function, NSSAAF) network element, an authentication server function (Authentication Server Function, AUSF) network element, and an access and mobility management function (Access and Mobility Management Function, AMF) network element, a session management function (Session Management Function, SMF) network element, a service communication proxy (Service Communication Proxy, SCP) network element, a network slice admission control function (Network Slice Admission Control Function, NSACF) network element, a user plane function (User Plane Function, UPF) network element, an xNF network element, or a data network (Data Network, DN). For example, the DN may be a carrier service, internet access, or a third-party service.

The NSSF network element determines, based on slice selection assistance information, subscription information, and the like of user equipment (User Equipment, UE), a network slice instance that the UE is allowed to access.

The NEF network element is configured to expose capabilities of various network functions (Network Function, NF) and convert internal and external information, and is used in an edge computing scenario.

The NRF network element provides registration and discovery functions, so that network functions can discover each other and communicate with each other through an application programming interface (Application Programming Interface, API).

The PCF network element is configured to provide policy rules for a control plane function, and is responsible for a control plane function of a 5G core network under policy control. Simply speaking, the PCF network element mainly manages QoS of each service data flow in the 5G core network.

The UDM network element is responsible for AKA (Authentication and Key Agreement) protocol authentication, user identification, access authorization, registration, mobility, subscription, and short message management.

The AF means various services in an application layer, and may be an internal application of a carrier or a third-party AF (for example, a video server or a game server).

The NSSAAF network element is configured to perform identity authentication and access authorization for a user who accesses a 5G network slice.

The AUSF network element is configured to implement 3GPP and non-3GPP access authentication.

The AMF network element is configured to: perform registration, connection, accessibility, and mobility management, provide a session management message transmission channel between UE and the SMF network element, and provide authentication and authorization functions during user access; and is an access point for a terminal to access a control plane of a wireless core network.

The SMF network element is responsible for tunnel maintenance, internet protocol (Internet Protocol, IP) address allocation and management, user name function selection, policy enforcement and QoS control, accounting data collection, roaming, and the like.

The SCP network element is an important network element for forwarding a hyper text transfer protocol (Hyper Text Transfer Protocol, HTTP) message in the 5G core network, and supports only flexible routing and indirect communication functions.

The NSACF network element is configured to perform access control based on a network slice supported by a user and a quantity of users in a radio resource control (Radio Resource Control, RRC) connected mode in a network slice group.

The UPF network element is responsible for packet routing and forwarding, policy enforcement, traffic reporting, and QoS handling. The UPF network element includes a PMF unit.

In this embodiment of this application, the xNF network element is a new functional entity in the 5G cellular communication system. In this case, the xNF network element is a first functional entity, and may support only processing of node status information of the T node in the short-range communication system and adjustment of a node adjustment parameter (a node-related adjustment parameter, for example, node status update information, quality of service QoS policy configuration information, or a node status report policy), or may support only processing of link status information and a link detection policy configuration. Clearly, the xNF network element may alternatively support both processing of the node status information of the T node and the link status information and adjustment of the node adjustment parameter and a link detection policy (the node adjustment parameter and the link detection policy are control policy information). The xNF network element provides a service for another network element through a service-based Nxnf interface. Refer to FIG. 1b. The xNF network element includes a user plane function and a control plane function. First information (including the node status information and/or the link status information) of the T node may be transmitted through a user plane or a control plane. For user plane transmission, the T node needs to establish an IP connection to the xNF network element, requiring extra signaling overheads compared with control plane transmission. Therefore, the first information of the T node is preferably exchanged based on the control plane function. More specifically, the first information may be transmitted through the control plane in a form of a container (container), or may be transmitted through the user plane based on a configuration according to a TR-069 transmission protocol or transmitted through a PMF user plane. The TR-069 transmission protocol provides a general framework, message specifications, a management method, and a data model to provision and manage a home network device in a next-generation network. In the transmission through the PMF user plane, the first information is sent to the PMF unit of the UPF network element, and then may arrive the xNF network element through forwarding.

The PMF network element supports detection of an end-to-end link between a terminal and the 5G core network. For details, refer to a definition in the prior art. Details are not described herein again. In this embodiment, the PMF function is extended based on an original function, and supports at least short-range measurement, and optionally, detection of a status of the terminal node and an end-to-end link status (that is, a link on which the terminal node is located, including a link between the terminal node and the grant node, or a link between the terminal node and the 5G core network). For a specific PMF protocol, refer to a definition in the prior art. This is not specifically limited herein.

It is easy to understand that the short-range communication system and the 5G cellular communication system in FIG. 1a may include fewer or more components. Details are not specifically described.

It should be noted that, in the short-range communication system 102 and the 5G cellular communication system 101, for a detailed process in which the T node reports the first information to the xNF network element and the T node receives the control policy information delivered by the xNF network element, refer to related descriptions in the following content.

Method embodiments of this application are described in detail below with reference to FIG. 2, FIG. 4, FIG. 6, and FIG. 9. Specific embodiments are used below to describe in detail technical solutions of this application. The following several specific embodiments may be combined with each other, and a same or similar concept or process may not be described repeatedly in some embodiments. It should be understood that FIG. 2, FIG. 4, FIG. 6, and FIG. 9 each are a schematic flowchart of a communication method according to an embodiment of this application, and show detailed communication steps or operations in the method. However, these steps or operations are only examples. Alternatively, in embodiments of this application, other operations or variations of the operations in FIG. 2, FIG. 4, FIG. 6, and FIG. 9 may be performed. In addition, the steps in FIG. 2, FIG. 4, FIG. 6, and FIG. 9 may be performed in a sequence different from that presented in FIG. 2, FIG. 4, FIG. 6, and FIG. 9, and it is possible that not all the operations in FIG. 2, FIG. 4, FIG. 6, and FIG. 9 need to be performed.

This application provides a communication method. FIG. 2 is a flowchart of interaction in a communication method according to an embodiment of this application. The communication method includes at least the following steps.

Step S201: A first node obtains first information of the first node in a first communication system.

Specifically, the first information includes one or more of status information of the first node, status information of a first link, or the like. The status information of the first node is information related to the first node (related content of the status information of the first node is described in detail below).

The first link is a link used for communication of the first node. For example, the first node is an end of the first link. The status information of the first link is information related to a link status of the first link (related content of the status information of the first link is described in detail below).

Optionally, there may be a plurality of designs of manners for the first node to obtain the first information. For example, the first information may be obtained by the first node through detection. For example, the first node may detect channel quality when communication is performed based on the first link, to obtain detection result information related to the channel quality. The first information may include the detection result information related to the channel quality. For another example, the status information of the first link may be received by the first node from another node. For example, the first node may receive channel quality indication information sent by a peer end, to obtain quality indication information. The first information may include the quality indication information.

Step S202: The first node sends the first information to a first functional entity in a second communication system in a first manner.

Correspondingly, the first functional entity receives the first information from the first node in the first communication system.

The first manner is a manner of sending the first information. It should be noted that, in a process in which the first node sends the first information to the first functional entity in the second communication system, the first information may be forwarded by another node. A quantity of nodes via which the first information is forwarded is not limited in this application. For example, the first node may directly send the first information to the first functional entity in the second communication system (that is, there is zero forwarding), or may indirectly send the first information to the first functional entity in the second communication system (that is, the first node forwards the first information to the first functional entity via another device, in other words, there are one or more times of forwarding).

Therefore, according to the communication method in this embodiment of this application, a functional entity in the second communication system may obtain information of a node in the first communication system, so that the second communication system can perceive and manage the node in the first communication system. That is, the information of the first node can be reported, to satisfy a requirement for managing the first node. This helps improve effect of converging the first communication system and the second communication system.

Optionally, the first node sends the first information to a second functional entity in the second communication system, so that the second functional entity forwards the first information to the first functional entity.

Correspondingly, the second functional entity receives the first information of the first node, and sends the first information to the first functional entity. The second functional entity is a functional entity that performs information forwarding in the second communication system.

In some possible implementations, the status information of the first node includes one or more of the following: hardware version information, software version information, or node power information. The hardware version information is version information of hardware of the first node. A hardware version may be classified into major versions (for example, V1.0 and V2.0) and minor versions (V1.1, V1.2, V2.1, and V2.2). The software version information is version information of software of the first node. The software version information may be classified into a large-data-volume version (that is, a full version) and a small-data-volume version (for example, a patch). Clearly, the status information of the first node includes but is not limited to the information listed above.

In some possible implementation, the first communication system further includes a grant node of the first node. The grant node is a trusted grant node. The trusted grant node means that the grant node has been registered with and authenticated by the second communication system and is configured to manage the first node. The first communication system may include one or more grant nodes, and each grant node correspondingly manages one or more first nodes subject to the grant node. The second communication system further includes a third functional entity that is a functional entity having a PMF unit and that is specifically configured to parse PMF information received from the first node (that is, the first information encapsulated according to a PMF protocol). The status information of the first link includes a first status measurement quantity and/or a second status measurement quantity. The first status measurement quantity is a measurement quantity of a status of a link between the first node and the grant node corresponding to the first node, and the second status measurement quantity is a measurement quantity of a status of a link between the first node and the second communication system. The measurement quantity of the status of the link between the first node and the second communication system may be a measurement quantity of a status of a link between the first node and the first functional entity, a measurement quantity of a status of a link between the first node and the third functional entity, and/or the like. Clearly, the status information of the first link includes but is not limited to the information listed above.

In some possible implementations, the first status measurement quantity includes at least one of the following: a reference signal received power (Reference Signal Received Power, RSRP), reference signal received quality (Reference Signal Received Quality, RSRQ), a signal-to-interference plus noise ratio (Signal-to-Interference plus Noise Ratio, SINR), a channel quality indicator (Channel Quality Indicator, CQI) value, a precoding matrix indicator (Precoding Matrix Indicator, PMI) value, or a rank indicator (Rank Indicator, RI) value. Clearly, the first status measurement quantity includes but is not limited to the information listed above. Actually, when the first status measurement quantity is sent, a time stamp at which data is measured to obtain the first status measurement quantity may further be sent to the first functional entity.

A CQI reflects channel quality of a physical downlink shared channel (PDSCH: Physical Downlink Shared Channel). 0 to 15 are used to indicate the channel quality of the PDSCH. 0 indicates poorest channel quality, and 15 indicates best channel quality.

The RI value indicates a rank (Rank) of a channel impulse response (H) in two spatial multiplexing modes (open-loop and closed-loop) for transmission. That is, RI=Rank(H). The RI value is a reference for a data transmission capacity and indicates a good or poor channel condition or a terminal capability.

A PMI indicates an index of a codebook set.

In some possible implementations, the second status measurement quantity includes one or more of the following: an end-to-end round-trip time (Round-Trip Time, RTT), a packet loss rate, or a jitter amount. Clearly, the second status measurement quantity includes but is not limited to the information listed above. Similarly, actually, when the second status measurement quantity is sent, a time stamp at which data is measured to obtain the second status measurement quantity may further be sent to the first functional entity.

For example, information elements of the first information are set as in following Table 1:

**Table 1 Information elements of the first information**

| Information element | Type | Status of appearing | Format | Length (byte) |
|---|---|---|---|---|
| Message identifier of the first information | Message type | Required | Value | 1 |
| Status information of the first node | Node status information | Optional | Length, type, and value | Adjustable |
| Status information of the first link | Link status detection information | Optional | Length, type, and value | Adjustable |

Data setting for the first information of the first node may be performed based on a sequence of the information elements in Table 1, and the message identifier of the first information is used to identify that subsequently sent data belongs to the first information, that is, to identify a data type. The "length" in the table is a data length of the information element. Using the status information of the first node as an example, in this case, the "length" is a data length of the status information of the first node. The "type" is a data type of the information element, and the "value" is a specific value corresponding to the information element. Similarly, using the status information of the first node as an example, in this case, the "type" and the "value" are respectively a data type of the status information of the first node and a specific node status detection value, for example, a node power value. Finally, "adjustable" in Table 1 means that a data length of a corresponding information element may be set and adjusted based on an actual case.

Optionally, the first information may be sent in a form of a small channel associated data packet. It is easy to understand that a form of sending the first information is not limited to the small channel associated data packet, and a form of sending the first information is not specifically limited.

In some possible implementations, as shown in FIG. 2, the communication method further includes the following steps.

Step S203: The first node receives control policy information from the first functional entity, where the control policy information is used to configure the first node.

Correspondingly, the first functional entity sends the control policy information to the first node. In a specific design, when determining the control policy information sent to the first node, the first functional entity may determine the control policy information for the first node based on the first information of the first node, or may determine the control policy information in another manner. This is not specifically limited herein. It should be noted that, in a process in which the first functional entity sends the control policy information to the first node, the control policy information may be forwarded by another node. A quantity of nodes via which the control policy information is forwarded is not limited in this application. In an optional design, the second functional entity receives the control policy information from the first functional entity, and then the second functional entity forwards the control policy information to the first node.

In this embodiment of this application, the first functional entity performs information configuration for the first node by delivering the control policy information. The first functional entity may manage a status of the first node, a status detection policy for a communication link, or the like, to manage a terminal node. This improves resource utilization and improves effect of converging the first communication system and the second communication system. Further, the control policy information includes one or more of the following: node status update information, QoS policy configuration information, a node status report policy, or a link status detection policy. Clearly, the control policy information includes but is not limited to the information listed above.

The node status update information includes one or more of node configuration parameter information and information about updating the status information of the first node. The information about updating the status information of the first node is, for example, node hardware version update information or node software version update information. The node configuration parameter information is related configuration information for the first node, for example, one or more of power-on/off management information or sleep-state management information. The power-on/off management information is power-on/off control information for the first node, and the sleep-state management information is sleep-state control information for the first node. The QoS policy configuration information is used to configure a QoS policy of the first node. The node status report policy is a report policy corresponding to the status information of the first node. Optionally, the node status report policy includes one or more of the following: an object to be reported, a report periodicity, or an event parameter. Finally, the link status detection policy is a detection policy corresponding to the status information of the first link. Optionally, the link status detection policy includes at least one of the following: an object to be measured, an object to be reported, a report threshold, a report periodicity, or an event parameter.

For example, information elements of the control policy information are set as in following Table 2:

**Table 2 Information elements of the control policy information**

| Information element | Type | Status of appearing | Format | Length (byte) |
|---|---|---|---|---|
| Message identifier of the control policy information | Message type | Required | Value | 1 |
| Node status update information | Node status update | Optional | Length, type, and value | Adjustable |
| QoS policy configuration information | QoS policy configuration information | Optional | Length, type, and value | Adjustable |
| Node status report policy | Node status report policy | Optional | Length, type, and value | Adjustable |
| Link status detection policy | Link status detection policy | Optional | Length, type, and value | Adjustable |

Data setting for the control policy information may be performed based on a sequence of the information elements in Table 2, and the message identifier of the control policy information is used to identify that subsequently sent data belongs to the control policy information, that is, to identify a data type. The "length" in the table is a data length of the information element. Using the node status update information as an example, in this case, the "length" is a data length of the node status update information. The "type" is a data type of the information element, and the "value" is a specific value corresponding to the information element. Similarly, using the node status update information as an example, in this case, the "type" and the "value" are respectively a data type of the node status update information and a specific node status update value, for example, a node hardware version update value. Finally, "adjustable" in Table 2 means that a data length of a corresponding information element may be set and adjusted based on an actual case.

In some possible implementations, before the first node sends the first information to the first functional entity, the communication method in this embodiment of this application may further include:

The first node receives sending manner indication information, where the sending manner indication information indicates the first manner.

Correspondingly, the first functional entity sends the sending manner indication information to the first node.

In this embodiment of this application, the sending manner indication information is sent, so that the first node determines, based on the sending manner indication information, the first manner of sending the first information to the first functional entity. Specifically, the first manner includes three manners: a control plane sending manner, a user plane sending manner based on a first functional entity, and a PMF (Performance Measurement Function, performance measurement function) user plane sending manner. Clearly, the first manner includes but is not limited to these listed manners. The control plane sending manner is a control plane sending manner based on NAS transmission, and the PMF user plane sending manner is a user plane sending manner according to a PMF protocol.

Correspondingly, when the first manner includes the foregoing three manners, the sending manner indication information may indicate each of the three manners. For example, sending manner indication information F1 corresponds to the control plane sending manner, sending manner indication information F2 corresponds to the user plane sending manner based on the first functional entity, and sending manner indication information F3 corresponds to the PMF user plane sending manner. Alternatively, sending manner indication information KZ corresponds to the control plane sending manner, sending manner indication information YH corresponds to the user plane sending manner based on the first functional entity, and sending manner indication information PMF corresponds to the PMF user plane sending manner. A specific form of the sending manner indication information includes but is not limited to the foregoing examples. This is not specifically limited herein.

It should be noted that the first communication system may further include a gateway node. The gateway node may be connected to the grant node, and is used as a communication bridge between the first communication system and another communication system. The sending manner indication information may be sent by the first functional entity to the first node based on an actual case, or may be sent by the grant node or the gateway node in the first communication system to the first node. The grant node or the gateway node may send the preconfigured sending manner indication information to the first node, to indicate the first node to send the first information in the first manner corresponding to the sending manner indication information.

There may be the following several possible implementations of the first manner:

Implementation 1: The first manner is the control plane sending manner; and therefore, step S202 may specifically include:

The first node sends a NAS message to the second functional entity in the second communication system, where the NAS message includes the first information.

Correspondingly, the second functional entity receives the NAS message sent by the first node, and the second functional entity sends the first information to the first functional entity.

In this embodiment of this application, when the first manner is the control plane sending manner, the first node sends the NAS message to the second functional entity, where the NAS message includes the first information, so that the first information may be sent to the first functional entity via the second functional entity. For example, the first information may be encapsulated in the NAS message in a form of a message container for transmission.

Optionally, when the first node sends the first information to the first functional entity in the control plane sending manner, the first functional entity may forward the control policy information via the second functional entity. The control policy information is encapsulated in the NAS message, and the second functional entity sends the NAS message to the first node, so that the first node receives the control policy information.

An example in which the first communication system is a short-range communication system and the second communication system is a 5G cellular communication system is used below for detailed description.

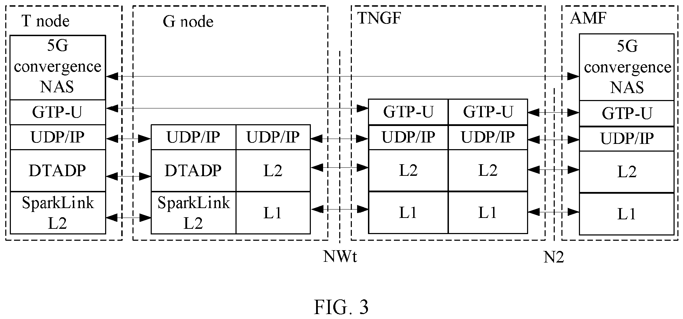

Refer to FIG. 1a and FIG. 1b. In this embodiment, the first node is a T node, the first functional entity is an xNF network element, the second functional entity is an AMF network element, and the first manner is a manner of transmission through a control plane of the xNF network element. FIG. 3 is a schematic diagram of a transmission protocol stack for a control plane sending manner according to an embodiment of this application. Data is transmitted between a T node, a G node, a gateway node TNGF, and an AMF network element according to the protocol stack shown in FIG. 3. First information of the T node includes node status information of the T node (that is, status information of the first node) and/or link status information (that is, status information of a first link, where in this embodiment, the status information of the first link is a status of a link between the T node and the G node, and/or a status of a link between the T node and the xNF network element), and the first information of the T node is encapsulated in a NAS message in a form of a message container for transmission.

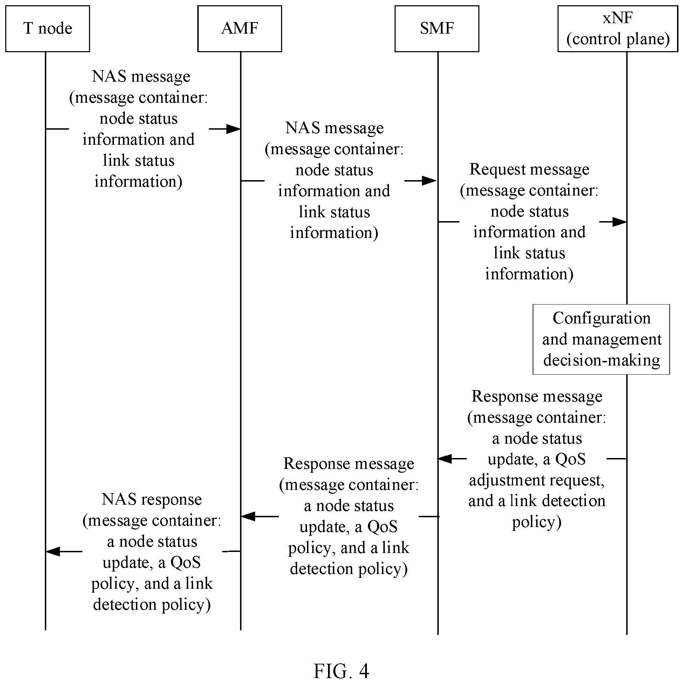

Refer to FIG. 1a and FIG. 4. FIG. 4 is a flowchart of detailed interaction in a communication method according to an embodiment of this application. For example, both the node status information of the T node and the link status information are sent. A process of interaction between the T node and the xNF network element is specifically as follows:
Step 1: The T node encapsulates the node status information and the link status information in the NAS message in the form of a message container according to the transmission protocol stack in FIG. 3, and sends the NAS message to the AMF network element, and then the AMF network element forwards the NAS message to an SMF network element.
Step 2: The SMF network element sends a request message to the xNF network element, where the request message includes the node status information of the T node and the link status information.
Step 3: The xNF network element performs, based on the status information in step 2, configuration and management decision-making to determine first control policy information of the T node. The xNF network element generates the first control policy information based on the node status information of the T node and the link status information. The first control policy information includes one or more of the following: node status update information (for example, node hardware version update information and node software version update information), a QoS adjustment request, a node status report policy, and a link status detection policy. The xNF network element delivers the first control policy information to the SMF network element in a form of a response message.
Step 4: When the first control policy information includes the QoS adjustment request, the SMF network element responds to the QoS adjustment request of the xNF network element to perform QoS policy adjustment, to generate a QoS policy (that is, QoS policy configuration information) of the T node. The SMF network element then sends the node status update information, the QoS policy of the T node, the node status report policy, and the link status detection policy to the AMF network element in a form of a response message (specifically in a form of a message container). The AMF network element then sends a NAS response message (that is, second control policy information, including one or more of the following: node status update information, QoS policy configuration information, a node status report policy, and a link status detection policy) to the T node, so that the T node maintains and reports node status information, and detects and reports a link status based on the received NAS response message. It should be noted that, when the first control policy information does not include the QoS adjustment request, after receiving the first control policy information, the SMF network element sends the first control policy information to the T node via the AMF network element, so that the T node maintains and reports node status information, and detects and reports a link status based on the received first control policy information.

Through the interaction procedure in FIG. 4, a 5G core network can manage a terminal node in a short-range communication system based on node status information, link status information, and a control plane function of an xNF network element. This can effectively improve resource utilization, and improve effect of converging a 5G cellular communication network and the short-range communication system.

Implementation 2: The first manner is the user plane sending manner based on the first functional entity; and therefore, step S202 specifically includes:
S2021: The first node establishes an IP connection to the first functional entity based on network identifier information of the first functional entity.

Specifically, the first node establishes the IP connection to the first functional entity based on the network identifier information of the first functional entity, where the network identifier information of the first functional entity may be an IP address and a port number of the first functional entity.

S2022: The first node sends the first information to the first functional entity through the IP connection.

Correspondingly, the first functional entity receives the first information of the first node based on the IP connection.

Specifically, the first node sends the first information to the first functional entity according to a user plane data transmission protocol through the IP connection. In this embodiment of this application, when the first node sends the first information to the first functional entity based on the established IP connection, the first information may be encapsulated according to the user plane data transmission protocol, so that the first information can be transmitted through a user plane. The user plane data transmission protocol includes but is not limited to a TR-069 transmission protocol.

Optionally, when the first node sends the first information to the first functional entity in the user plane sending manner based on the first functional entity, the first functional entity may deliver the control policy information according to the user plane data transmission protocol. In other words, the first functional entity sends the control policy information to the first node based on the foregoing IP connection, so that the first node receives the control policy information.

Optionally, when the first node sends the first information to the first functional entity in the user plane sending manner based on the first functional entity, the first functional entity may further forward the control policy information via the second functional entity in the second communication system, so that the first node receives the control policy information.

In some possible implementations, the communication method in embodiments of this application further includes:
The first node sends a first request to the second functional entity in the second communication system, where the first request is used to request for the network identifier information of the first functional entity.

Correspondingly, the second functional entity receives the first request from the first node.

The first node receives the network identifier information of the first functional entity from the second functional entity.

Correspondingly, the second functional entity sends the network identifier information of the first functional entity to the first node in response to the first request. The second functional entity may obtain the network identifier information of the first functional entity in advance, or obtain the network identifier information of the first functional entity after receiving the first request. A method for the second functional entity to obtain the network identifier information of the first functional entity is not specifically limited.

In this embodiment of this application, the first request may be sent to the second functional entity, to request to obtain the network identifier information of the first functional entity. The first request may be a request, for example, a protocol data unit (Protocol Data Unit, PDU) session request. This is not specifically limited.

An example in which the first communication system is a short-range communication system and the second communication system is a 5G cellular communication system is used below for detailed description.

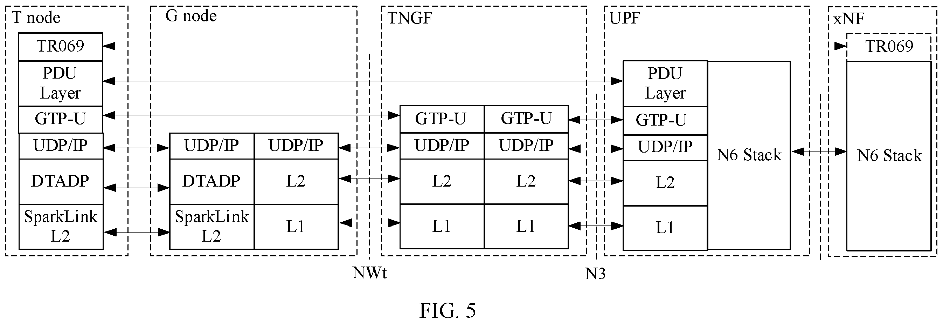

Refer to FIG. 1a and FIG. 1b. In this embodiment, the first node is a T node, the first functional entity is an xNF network element, the second functional entity is an AMF network element, and the first manner is a manner of transmission through a user plane of the xNF network element. First information of the T node includes node status information of the T node (that is, status information of the first node) and/or link status information (that is, status information of a first link, where in this embodiment, the status information of the first link is a status of a link between the T node and a G node, and/or a status of a link between the T node and the xNF network element). FIG. 5 is a schematic diagram of a transmission protocol stack for a user plane sending manner according to an embodiment of this application. Data is transmitted between a T node, a G node, a gateway node TNGF, a UPF network element, and an xNF network element according to the protocol stack shown in FIG. 5. In this embodiment, the node status information and/or the link status information are transmitted through a user plane based on a configuration according to a TR-069 transmission protocol.

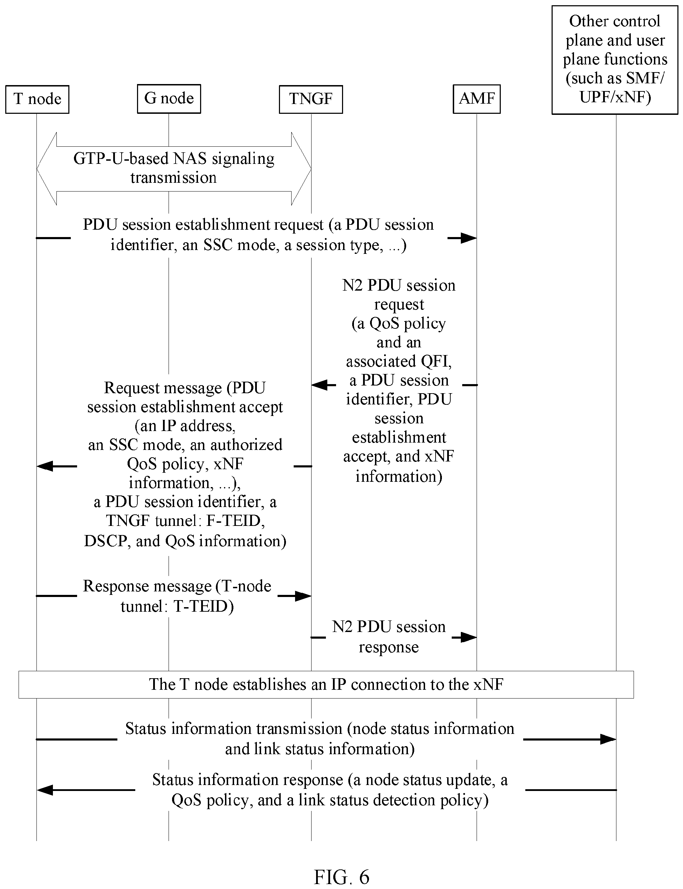

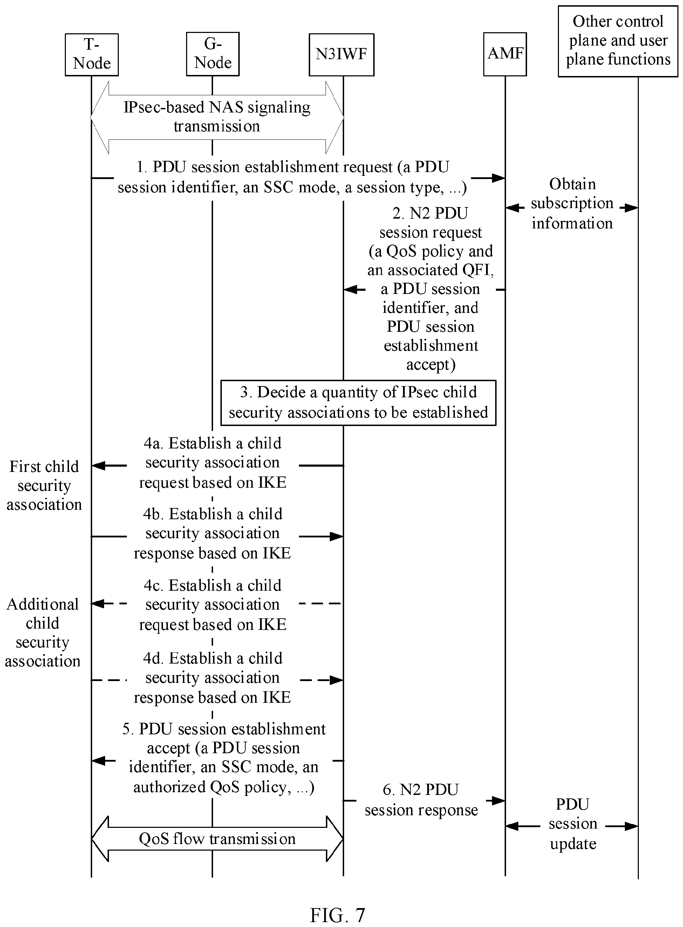

Refer to FIG. 1a and FIG. 6. FIG. 6 is a flowchart of detailed interaction in another communication method according to an embodiment of this application. For example, both the node status information of the T node and the link status information are sent. A process of interaction between the T node and the xNF network element is specifically as follows:
Step 1: In a process of establishing a PDU session with a core network, the T node obtains network identifier information of the xNF network element. For a PDU session establishment procedure, refer to a flowchart 4.12.5-1 in Clause 4.12.5 in present 3GPP 23.502 Release 17 (as shown in FIG. 7, FIG. 7 is a flowchart of PDU session establishment in the prior art). A difference lies in that xNF information is added to an N2 PDU session request and a PDU session establishment accept message in FIG. 6. The xNF information is the network identifier information (including an IP address and a port number of the xNF) of the xNF network element.

Specifically, the T node performs NAS signaling transmission with the gateway node TNGF according to a GTP-U protocol. Then, the T node sends a PDU session establishment request to the AMF network element. The PDU session establishment request includes a PDU session identifier, an SSC mode, a session type, and the like. The AMF network element obtains the network identifier information of the xNF network element based on the PDU session request.

Then, the AMF network element sends the N2 PDU session request to the TNGF in response to the PDU session establishment request. The N2 PDU session request includes a QoS policy and an associated QFI, that is, a QoS flow ID, a PDU session identifier, a PDU session establishment accept message, and the xNF information. The xNF information is the network identifier information of the xNF network element, that is, the IP address and the port number. Then, the TNGF sends a request message to the T node. The request message includes the PDU session establishment accept message (the IP address, the SSC mode, an authorized QoS policy, the xNF information, ...), the PDU session identifier, a TNGF tunnel: an F-TEID, a differentiated services code point (Differentiated Services Code Point, DSCP), and QoS information. Then, the T node sends a response message to the TNGF, where the response message includes a T-node tunnel: F-TEID information. Then, the TNGF sends an N2 PDU session response message to the AMF network element.

Step 2: An IP connection between the T node and the xNF network element is established based on the IP address and a port of the xNF network element that are obtained in a PDU session process.

Step 3: User plane information exchange may be performed based on the IP connection established between the T node and the xNF network element. The T node sends the node status information and/or the link status information to the xNF network element based on the IP connection. Refer to FIG. 5, a message forwarding process includes:
The T node encapsulates the status information (that is, the node status information and/or the link status information) through an NWt interface according to a TR-069 transmission protocol, and then sends the encapsulated status information to the TNGF.

The TNGF forwards the information to the UPF network element, and the UPF network element parses the information and forwards related status information to the SMF network element.

The SMF network element sends the related status information to the xNF network element through a service-based Nxnf interface. Specifically, the SMF network element may send the status information to the xNF network element in a form of a request message or a report message. Correspondingly, the xNF network element returns a configuration or a response message to the SMF network element.

Step 4: The xNF network element generates control policy information based on the status information, and sends the control policy information to the T node by using a related functional module, that is, gives a status information response shown in FIG. 6. A specific message delivery process includes:
The xNF network element performs configuration and management decision-making based on the status information in step 3. The xNF network element generates the control policy information based on the node status information of the T node and the link status information. The control policy information includes one or more of the following: node status update information (for example, node hardware version update information and node software version update information), QoS policy configuration information, a node status report policy, and a link status detection policy. Specifically, the xNF network element sends a QoS adjustment request to the SMF network element to request the SMF network element to perform QoS adjustment to obtain the QoS policy configuration information of the T node. Then, the xNF network element sends, to the T node, the control policy information, that is, one or more of the node status update information, the QoS policy configuration information, the link status detection policy, and the node status report policy according to an xNF network element user plane data transmission protocol, so that the T node maintains and reports node status information, and detects and reports a link status based on the received control policy information.

Through the interaction procedure in FIG. 6, a 5G core network can effectively manage a T node in a short-range communication system based on node status information of the T node, link status information, and a user plane function of an xNF network element. This can effectively improve resource utilization, and improve effect of converging a 5G cellular communication network and the short-range communication system.

It should be noted that, optionally, when the xNF network element forwards the control policy information via the AMF network element, as shown in FIG. 1a, the xNF network element sends the control policy information to the AMF network element, so that the AMF network element sends the control policy information to the T node through an N1 interface or an N2 interface. The AMF network element sends the control policy information to the T node through the N1 interface. Alternatively, the AMF network element may send the control policy information to the gateway node TNGF through the N2 interface, and then the gateway node TNGF forwards the control policy information to the T node. Clearly, the gateway node TNGF may alternatively forward the control policy information to the G node, and then the G node forwards the control policy information to the T node.

Implementation 3: The first manner is the PMF user plane sending manner; and therefore, step S202 specifically includes:
The first node sends the first information to the PMF unit of the third functional entity in the second communication system based on network identifier information of the PMF unit.

Correspondingly, the PMF unit of the third functional entity receives the first information of the first node.

In this embodiment of this application, when the first manner is the PMF user plane sending manner, the first information is sent to the PMF unit of the third functional entity based on the network identifier information of the PMF unit, so that the first information can be sent to the first functional entity by using the PMF unit. The network identifier information of the PMF unit may be an IP address and a port number of the PMF unit.

Optionally, when the first node sends the first information to the first functional entity in the PMF user plane sending manner, the first functional entity may deliver the control policy information to the first node by using the PMF unit, so that the first node receives the control policy information.

Optionally, when the first node sends the first information to the first functional entity in the PMF user plane sending manner, the first functional entity may further forward the control policy information via the second functional entity in the second communication system, so that the first node receives the control policy information.

Optionally, that the first node sends the first information to the PMF unit includes:
The first node sends the following one or more pieces of detection request information: an end-to-end round-trip time RTT detection request message or a packet loss rate detection request message to the PMF unit, where the end-to-end round-trip time RTT detection request message or the packet loss rate detection request message includes the first information.

Correspondingly, the PMF unit receives the following one or more pieces of detection request information: the end-to-end round-trip time RTT detection request message or the packet loss rate detection request message.

In this embodiment of this application, when the first information is sent to the PMF unit, the first information may be carried in the RTT detection request message or the packet loss rate detection request message, to send the first information to the PMF unit. Simply speaking, a detection interaction procedure and a message structure based on an RTT and a packet loss rate may complete reporting of the first information.

In some possible implementations, the communication method in embodiments of this application further includes:
The first node sends a second request to the second functional entity in the second communication system, where the second request is used to request for the network identifier information of the PMF unit.

Correspondingly, the second functional entity receives the second request from the first node.

The first node receives the network identifier information of the PMF unit from the second functional entity.

Correspondingly, the second functional entity sends the network identifier information of the PMF unit to the first node. The second functional entity may obtain the network identifier information of the PMF unit in advance, or obtain the network identifier information of the PMF unit after receiving the second request. A method for the second functional entity to obtain the network identifier information of the PMF unit is not specifically limited.

In this embodiment of this application, the second request may be sent to the second functional entity to request to obtain the network identifier information of the PMF unit. The second request may be a request, for example, a PDU session request. This is not specifically limited.

An example in which the first communication system is a short-range communication system and the second communication system is a 5G cellular communication system is used below for detailed description.

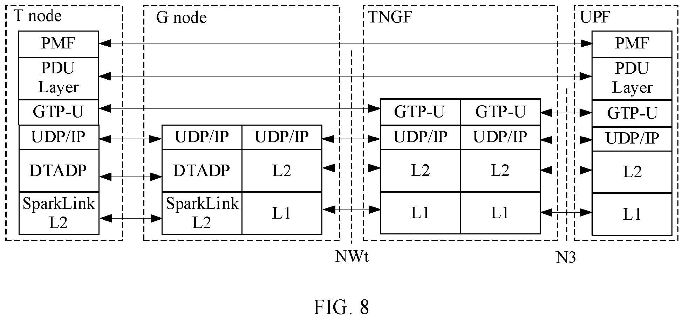

Refer to FIG. 1a and FIG. 1b. In this embodiment, the first node is a T node, the first functional entity is an xNF network element, the second functional entity is an AMF network element, the third functional entity is a UPF network element, and the first manner is a user plane transmission manner based on a PMF unit. First information of the T node includes one or more of node status information of the T node (that is, status information of the first node) or link status information (that is, status information of a first link, where in this embodiment, the status information of the first link is a status of a link between the T node and a G node, and/or a status of a link between the T node and the UPF network element). FIG. 8 is a schematic diagram of a transmission protocol stack for a PMF user plane sending manner according to an embodiment of this application. Data is transmitted between a T node, a G node, a gateway node TNGF, and a UPF network element according to the protocol stack shown in FIG. 8. In this embodiment, data packets of the node status information and/or the link status information are encapsulated by the PMF unit and submitted to a PDU Layer module for transmission.

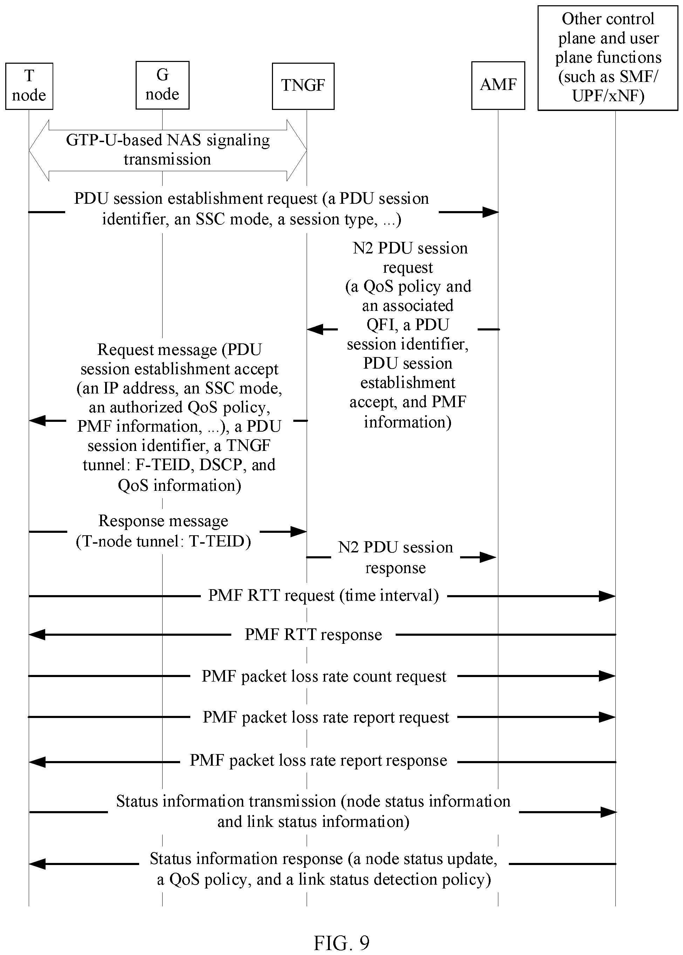

Refer to FIG. 1a and FIG. 9. FIG. 9 is a flowchart of detailed interaction in still another communication method according to an embodiment of this application. For example, both the node status information of the T node and the link status information are sent. A process of interaction between the T node and the xNF network element is specifically as follows:
Step 1: In a process of establishing a PDU session with a core network, the T node obtains network identifier information of a PMF unit. For a PDU session establishment procedure, refer to a flowchart 4.12.5-1 in Clause 4.12.5 in present 3GPP 23.502 Release 17 (as shown in FIG. 7). A difference lies in that PMF information is added to an N2 PDU session request and a PDU session establishment accept message in FIG. 9. The PMF information is the network identifier information (including an IP address and a port number of the PMF unit) of the PMF unit.

Specifically, the T node performs NAS signaling transmission with the gateway node TNGF according to a GTP-U protocol. Then, the T node sends a PDU session establishment request to the AMF network element. The PDU session establishment request includes a PDU session identifier, an SSC mode, a session type, and the like. The AMF network element forwards the PDU session request to an SMF network element, and the SMF network element obtains the network identifier information of the PMF unit of a UPF network element based on the PDU session request. Then, the AMF network element sends the N2 PDU session request to the TNGF in response to the PDU session establishment request. The N2 PDU session request includes a QoS policy and an associated QFI, that is, a QoS flow ID, a PDU session identifier, a PDU session establishment accept message, and the PMF information. Then, the TNGF sends a request message to the T node. The request message includes the PDU session establishment accept message (the IP address, the SSC mode, an authorized QoS policy, the PMF information, ...), the PDU session identifier, a TNGF tunnel: an F-TEID, a differentiated services code point (Differentiated Services Code Point, DSCP), and QoS information. Then, the T node sends a response message to the TNGF, where the response message includes a T-node tunnel: F-TEID information. Then, the TNGF sends an N2 PDU session response message to the AMF network element.

Step 2: The T node sends first information of the T node to the PMF unit based on the IP address and a port of the PMF unit that are obtained in a PDU session process. The first information of the T node is sent to the PMF unit through an interaction procedure with RTT and packet loss rate detection or through a new message sending procedure, and then the PMF unit forwards the first information of the T node to the xNF network element.

Optionally, the first information (that is, the node status information and/or the link status information) of the T node and the control policy information are carried in an RTT-related message. That is, the first information of the T node and the control policy information are carried in an RTT message exchanged through a PMF protocol procedure. Specifically, the first information of the T node is carried in an RTT detection request message, and the control policy information is carried in an RTT response message of a core network.

Optionally, the first information (that is, the node status information and/or the link status information) of the T node and the control policy information are carried in a packet loss rate detection-related message. That is, the first information of the T node and the control policy information are carried in a packet loss rate exchange message exchanged through the PMF protocol procedure. Specifically, the first information of the T node is carried in a packet loss rate count request message or a PMF packet loss rate report request message, and the control policy information is carried in a packet loss rate report response message of the core network.

Optionally, the T node may directly send the first information of the T node (that is, the node status information and/or the link status information, as status information transmission shown in FIG. 9) to the PMF unit. Specifically, the T node sends the first information to the TNGF through an NWt interface; and the TNGF forwards the first information to the PMF unit of the UPF network element through an N3 interface. After the PMF unit receives the first information of the T node, the UPF network element sends the first information to the SMF network element through an N4 interface; and the SMF network element sends the first information to the xNF network element through a service-based Nxnf interface, and the xNF network element performs decision-making based on the first information. The xNF network element generates control policy information based on the first information, and sends the control policy information to the T node by using a related functional module, that is, gives a status information response shown in FIG. 9. A specific message delivery process includes:

The xNF network element sends a QoS adjustment request to the SMF network element to request the SMF network element to perform QoS adjustment to obtain the QoS policy configuration information of the T node. Then, the xNF network element forwards, to the PMF unit, the control policy information, that is, one or more of the node status update information, the QoS policy configuration information, the link status detection policy, and the node status report policy, and the PMF unit sends the control policy information to the T node, so that the T node maintains and reports node status information, and detects and reports a link status based on the received control policy information.

Through the interaction procedure shown in FIG. 9, a 5G core network can manage a T node in a short-range communication system based on node status information of the T node, link status information, and a PMF extension function. This can effectively improve resource utilization, and improve effect of converging a 5G cellular communication network and the short-range communication system.

It should be noted that, optionally, when the xNF network element forwards the control policy information via the AMF network element, as shown in FIG. 1a, the xNF network element sends the control policy information to the AMF network element, so that the AMF network element sends the control policy information to the T node through an N1 interface or an N2 interface. The AMF network element sends the control policy information to the T node through the N1 interface. Alternatively, the AMF network element may send the control policy information to the gateway node TNGF through the N2 interface, and then the gateway node TNGF forwards the control policy information to the T node. Clearly, the gateway node TNGF may alternatively forward the control policy information to the G node, and then the G node forwards the control policy information to the T node.

In this implementation, when no xNF network element is added in the 5G cellular communication system, the first functional entity may be the SMF network element. In an optional design, through the interaction procedure shown in FIG. 9, the SMF network element may obtain the first information of the T node. The SMF network element may generate the QoS policy configuration information based on the first information. Then, the UPF network element encapsulates the QoS policy configuration information, and the UPF network element forwards the encapsulated QoS policy configuration information to the T node. Alternatively, the SMF network element may not generate the QoS policy configuration information based on the first information, but generate the QoS policy configuration information by using another method for generation. This is not specifically limited herein.

It should be noted that, in the interaction procedures shown in FIG. 4, FIG. 6, and FIG. 9, the first node may alternatively be another node in the short-range communication system, for example, the G node. A procedure in which the G node reports the first information of the G node is the same as a reporting procedure of the T node. Details are not described herein again. A difference lies in that link status information of the G node is a status of a link between the G node and a 5G core network, and the link between the G node and the 5G core network may be a link between the G node and an xNF network element, or a link between the G node and a UPF network element.

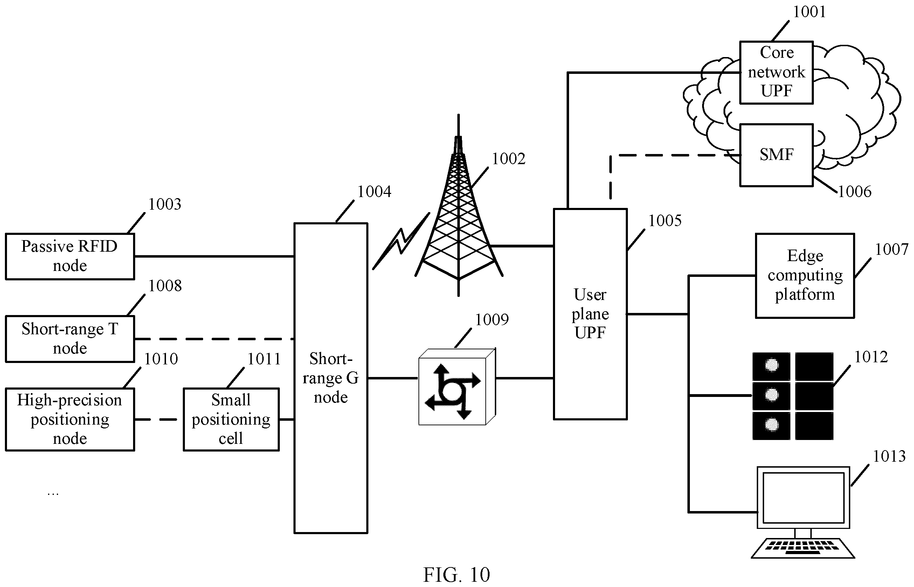

FIG. 10 is a schematic diagram of structures of another first communication system and another second communication system according to an embodiment of this application. In FIG. 10, the second communication system is a cellular communication system, and includes a base station 1002, a user plane UPF 1005, a core network UPF 1001, and an SMF 1006; and the first communication system may be one or more of a passive RFID communication system (including a passive RFID node 1003), a short-range communication system (including a short-range T node 1008, a short-range G node 1004, and a short-range gateway node 1009), a high-precision positioning communication system (including a high-precision positioning node 1010 and a small positioning cell 1011), and the like. The passive RFID communication system, the short-range communication system, the high-precision positioning communication system, and the like may share one short-range G node 1004 in the short-range communication system as an edge gateway of the communication system. The short-range T node 1008 reports, by using the foregoing communication method, first information of the short-range T node 1008 to a new xNF network element (not shown in FIG. 10) in the cellular communication system. Similarly, the passive RFID node 1003 and the high-precision positioning node 1010 may report information by using a communication method similar to that used by the short-range T node 1008.

Optionally, to process the information reported by the nodes, because the information is reported to the xNF network element via the user plane UPF 1005, an edge computing platform 1007, a field network digital twin platform 1012, and an office terminal 1013 may be connected to the user plane UPF 1005, so that the edge computing platform 1007, the field network digital twin platform 1012, and the office terminal 1013 process the reported information, display a processing result, and the like. The edge computing platform 1007 is an open platform that uses network, computing, storage, and application core capabilities as a whole on a side close to an object or a data source, to provide a nearest end service nearby. The field network digital twin platform 1012 is a simulation processing platform that integrates multi-disciplinary, multi-physical quantity, multi-scale, and multi-probability by using data, for example, a physical model, a sensor update, and running history, and completes mapping in virtual space, to reflect a full life cycle of corresponding physical equipment.

The method in embodiments of this application is described in detail above. An apparatus in embodiments of this application is provided below.

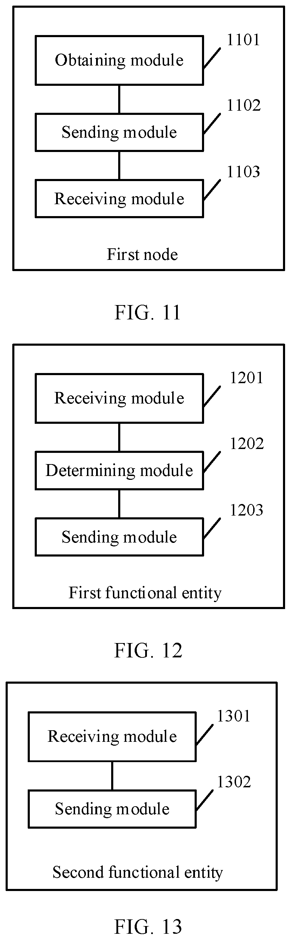

FIG. 11 is a schematic diagram of a structure of a first node according to an embodiment of this application. The first node includes an obtaining module 1101, a sending module 1102, and a receiving module 1103. The first node shown in FIG. 11 is configured to implement the foregoing communication method on a first node side.

In some possible implementations, the obtaining module 1101 is configured to obtain first information of the first node in a first communication system, where the first information includes status information of the first node and/or status information of a first link, and the first node is an end of the first link.

The sending module 1102 is configured to send the first information to a first functional entity in a second communication system in a first manner.

In some possible implementations, the status information of the first node includes one or more of the following: hardware version information, software version information, or node power information.

In some possible implementations, the status information of the first link includes one or more of a first status measurement quantity, a second status measurement quantity, and the like. The first status measurement quantity is a measurement quantity of a status of a link between the first node and a grant node of the first node, and the second status measurement quantity is a measurement quantity of a status of a link between the first node and the second communication system.

In some possible implementations, the first status measurement quantity includes one or more of the following: a reference signal received power RSRP, reference signal received quality RSRQ, a signal-to-interference plus noise ratio SINR, a channel quality indicator CQI value, a precoding matrix indicator PMI value, or a rank indicator RI value.

In some possible implementations, the second status measurement quantity includes one or more of the following: an end-to-end round-trip time RTT, a packet loss rate, or a jitter amount.

In some possible implementations, the receiving module 1103 is configured to receive control policy information from the first functional entity, where the control policy information is used to configure the first node.

In some possible implementations, the control policy information includes one or more of the following: node status update information, quality of service QoS policy configuration information, a node status report policy, or a link status detection policy.

In some possible implementations, the node status report policy includes one or more of the following: an object to be reported, a report periodicity, or an event parameter.

In some possible implementations, the link status detection policy includes one or more of the following: an object to be measured, an object to be reported, a report threshold, a report periodicity, or an event parameter.

In some possible implementations, the receiving module 1103 is further configured to receive sending manner indication information, where the sending manner indication information indicates the first manner.

In some possible implementations, the first manner is a control plane sending manner, and for sending the first information to the first functional entity in the second communication system in the first manner, the sending module 1102 is specifically configured to:
send a non-access stratum NAS message to a second functional entity in the second communication system, where the NAS message includes the first information.

In some possible implementations, the first manner is a user plane sending manner based on the first functional entity, and for sending the first information to the first functional entity in the second communication system in the first manner, the sending module 1102 is specifically configured to:
establish an internet protocol IP connection to the first functional entity in the second communication system based on network identifier information of the first functional entity; and send the first information to the first functional entity through the IP connection.

In some possible implementations, the sending module 1102 is further configured to send a first request to the second functional entity in the second communication system, where the first request is used to request for the network identifier information of the first functional entity.

The receiving module 1103 is further configured to receive the network identifier information of the first functional entity from the second functional entity.

In some possible implementations, for sending the first information to the first functional entity through the IP connection, the sending module 1102 is specifically configured to:
send the first information to the first functional entity according to a user plane data transmission protocol through the IP connection.

In some possible implementations, the first manner is a performance measurement function PMF user plane sending manner, and for sending the first information to the first functional entity in the second communication system in the first manner, the sending module 1102 is specifically configured to:
send the first information to a PMF unit of a third functional entity in the second communication system based on network identifier information of the PMF unit.

In some possible implementations, the sending module 1102 is further configured to send a second request to the second functional entity in the second communication system, where the second request is used to request for the network identifier information of the PMF unit.

The receiving module 1103 is further configured to receive the network identifier information of the PMF unit from the second functional entity.

In some possible implementations, for sending the first information to the PMF unit, the sending module 1102 is specifically configured to:
send an end-to-end round-trip time RTT detection request message and/or a packet loss rate detection request message to the PMF unit, where the end-to-end round-trip time RTT detection request message or the packet loss rate detection request message includes the first information.

The first node in this embodiment of this application is used, and the information of the first node can be reported, to implement refined management of the first node, and improve resource utilization.

It should be noted that this embodiment of the first node corresponds to the foregoing method embodiment. For specific descriptions and beneficial effects, refer to the method embodiment. Details are not described again. It should be noted that, the apparatus embodiment may be used in conjunction with the foregoing method, or may be used alone.

FIG. 12 is a schematic diagram of a structure of a first functional entity according to an embodiment of this application. The first functional entity includes a receiving module 1201, a determining module 1202, and a sending module 1203. The first functional entity shown in FIG. 12 is configured to implement the foregoing communication method on a first functional entity side.

In some possible implementations, the receiving module 1201 is configured to receive first information from a first node, where the first information includes status information of the first node and/or status information of a first link, and the first node is an end of the first link.

The determining module 1202 is configured to determine control policy information of the first node based on the first information, where the control policy information is used to configure the first node.

The sending module 1203 is configured to send the control policy information.

In some possible implementations, the status information of the first node includes one or more of the following: hardware version information, software version information, or node power information.

In some possible implementations, the control policy information includes one or more of the following: node status update information, quality of service QoS policy configuration information, a node status report policy, or a link status detection policy.

In some possible implementations, the node status report policy includes one or more of the following: an object to be reported, a report periodicity, or an event parameter.

In some possible implementations, the link status detection policy includes one or more of the following: an object to be measured, an object to be reported, a report threshold, a report periodicity, or an event parameter.

In some possible implementations, the sending module 1203 is further configured to send sending manner indication information, where the sending manner indication information indicates a first manner, and the first manner is a manner of sending the first information.

The first functional entity in this embodiment of this application is used, and the information of the first node can be reported, to implement refined management of the first node, and improve resource utilization.

It should be noted that this embodiment of the first functional entity corresponds to the foregoing method embodiment. For specific descriptions and beneficial effect, refer to the method embodiment. Details are not described again. It should be noted that, the apparatus embodiment may be used in conjunction with the foregoing method, or may be used alone.

FIG. 13 is a schematic diagram of a structure of a second functional entity according to an embodiment of this application. The second functional entity includes a receiving module 1301 and a sending module 1302. The second functional entity shown in FIG. 13 is configured to implement the foregoing communication method on a second functional entity side.

In some possible implementations, the receiving module 1301 is configured to receive first information of a first node in a first communication system, where the first information includes status information of the first node and/or status information of a first link, and the first node is an end of the first link.

The sending module 1302 is configured to send the first information to a first functional entity in a second communication system.

In some possible implementations, the receiving module 1301 is further configured to receive control policy information from the first functional entity, where the control policy information is used to configure the first node; and the sending module is further configured to send the control policy information to the first node.

In some possible implementations, for receiving the first information of the first node in the first communication system, the receiving module 1301 is specifically configured to:
receive a NAS message from the first node, where the NAS message includes the first information.

In some possible implementations, the receiving module 1301 is further configured to receive a first request from the first node, where the first request is used to request for network identifier information of the first functional entity.

The sending module 1302 is further configured to send the network identifier information of the first functional entity.

In some possible implementations, the receiving module 1301 is further configured to receive a second request from the first node, where the second request is used to request for network identifier information of a PMF unit of a third functional entity in the second communication system.

The sending module 1302 is further configured to send the network identifier information of the PMF unit.

In some possible implementations, the status information of the first node includes one or more of the following: hardware version information, software version information, or node power information.

In some possible implementations, the status information of the first link includes one or more of a first status measurement quantity, a second status measurement quantity, and the like. The first status measurement quantity is a measurement quantity of a status of a link between the first node and a grant node in the first communication system, and the second status measurement quantity is a measurement quantity of a status of a link between the first node and the second communication system.

In some possible implementations, the first status measurement quantity includes one or more of the following: a reference signal received power RSRP, reference signal received quality RSRQ, a signal-to-interference plus noise ratio SINR, a channel quality indicator CQI value, a precoding matrix indicator PMI value, or a rank indicator RI value.

In some possible implementations, the second status measurement quantity includes one or more of the following: an end-to-end round-trip time RTT, a packet loss rate, or a jitter amount.

In some possible implementations, the control policy information includes one or more of the following: node status update information, quality of service QoS policy configuration information, a node status report policy, or a link status detection policy.

In some possible implementations, the node status report policy includes one or more of the following: an object to be reported, a report periodicity, or an event parameter.

In some possible implementations, the link status detection policy includes one or more of the following: an object to be measured, an object to be reported, a report threshold, a report periodicity, or an event parameter.

The second functional entity in this embodiment of this application is used, and the information of the first node can be reported, to implement refined management of the first node, and improve resource utilization.

It should be noted that this embodiment of the second functional entity corresponds to the foregoing method embodiment. For specific descriptions and beneficial effect, refer to the method embodiment. Details are not described again. It should be noted that, the apparatus embodiment may be used in conjunction with the foregoing method, or may be used alone.

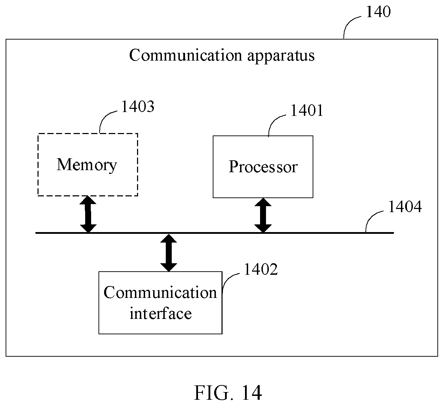

FIG. 14 is a schematic diagram of a structure of a communication apparatus 140 according to an embodiment of this application. The communication apparatus 140 may be a complete machine (for example, a first node, a first functional entity, or a second functional entity), or may be a component (for example, a chip, a software module, or a hardware module) in a complete machine. The communication apparatus 140 may include at least one processor 1401. Optionally, a communication interface 1402 may be further included. Further, optionally, the communication apparatus 140 may further include at least one memory 1403. Further, optionally, a bus 1404 may be further included. The processor 1401, the communication interface 1402, and the memory 1403 are connected through the bus 1404.

The processor 1401 is a module that performs an arithmetic operation and/or a logical operation, and may be specifically one of processing modules such as a central processing unit (central processing unit, CPU), a graphics processing unit (graphics processing unit, GPU), a microprocessor unit (microprocessor unit, MPU), an application-specific integrated circuit (Application-Specific Integrated Circuit, ASIC), a field programmable gate array (Field Programmable Gate Array, FPGA), a complex programmable logic device (Complex programmable logic device, CPLD), a coprocessor (assisting the central processing unit in completing corresponding processing and application), and a microcontroller unit (Micro Controller Unit, MCU), or a combination thereof.

The communication interface 1402 may be configured to provide information input or output for the at least one processor. In addition/alternatively, the communication interface 1402 may be configured to receive data sent from the outside and/or send data to the outside, and may be a wired link interface including, for example, an Ethernet cable, or may be a wireless link (Wi-Fi, Bluetooth, universal wireless transmission, an in-vehicle short-range communication technology, another short-range wireless communication technology, and the like) interface. Optionally, the communication interface 1402 may further include a transmitter (for example, a radio frequency transmitter, an antenna, or the like), a receiver, or the like that is coupled to the interface.

The memory 1403 is configured to provide storage space, and data such as an operating system and a computer program may be stored in the storage space. The memory 1403 may be one of a random access memory (random access memory, RAM), a read-only memory (read-only memory, ROM), an erasable programmable read-only memory (erasable programmable read only memory, EPROM), a compact disc read-only memory (compact disc read-only memory, CD-ROM), and the like, or a combination thereof.

The at least one processor 1401 of the communication apparatus 140 is configured to perform all or some steps in the foregoing communication method, for example, method steps on a first node side, method steps on a first functional entity side, or method steps on a second functional entity side. For related content, refer to the foregoing descriptions. Details are not described herein again.

Optionally, the processor 1401 may be a processor (referred to as a dedicated processor for ease of differentiation) specially configured to perform the methods, or may be a processor that executes the methods by invoking a computer program, for example, a general-purpose processor. Optionally, the at least one processor may further include both a dedicated processor and a general-purpose processor. Optionally, when the communication apparatus 140 includes the at least one processor 1401, the computer program may be stored in the memory 1403.

It should be noted that although the communication apparatus 140 shown in FIG. 14 only shows the memory, the processor, and the communication interface, and in a specific implementation process, persons skilled in the art should understand that the communication apparatus 140 further includes another component that is necessary for normal running. In addition, based on a specific requirement, persons skilled in the art should understand that the communication apparatus 140 may further include a hardware component for implementing another additional function. In addition, persons skilled in the art should understand that the communication apparatus 140 may include only components required for implementing embodiments of this application, but not necessarily include all components shown in FIG. 14.

This application provides a chip. The chip may include a processor and an interface. The processor is configured to read an instruction through the interface, to perform all or some steps in the communication method according to the foregoing method embodiment, for example, method steps on a first node side, method steps on a first functional entity side, or method steps on a second functional entity side.

The communication method in the foregoing method embodiment, for example, the method on the first node side, the method on the first functional entity side, or the method on the second functional entity side, may be implemented entirely or partially by using software, hardware, firmware, or any combination thereof. When software is used for implementation, the method may be implemented entirely or partially in a form of a computer program product. The computer program product includes one or more computer instructions. When the computer program instruction is loaded and executed on a computer, the procedures or functions according to embodiments of this application are entirely or partially generated. The computer may be a general-purpose computer, a dedicated computer, a computer network, or another programmable apparatus. The computer instruction may be stored in a computer-readable storage medium or may be transmitted from a computer-readable storage medium to another computer-readable storage medium. For example, the computer instruction may be transmitted from a website, computer, server, or data center to another website, computer, server, or data center in a wired (for example, using a coaxial cable, an optical fiber, or a digital subscriber line (DSL)) or wireless (for example, via infrared, radio, or microwaves) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive, Solid-State Drive (SSD)), or the like. Persons skilled in the art may use different methods to implement the described functions for each particular application, but it should not be considered that the implementation goes beyond the scope of this patent application.

This application further provides a terminal. The terminal includes the communication apparatus in the foregoing apparatus embodiment.

Examples of some terminals include but are not limited to: a smart household device (for example, a television, a sweeping robot, a smart desk lamp, a sound system, a smart lighting system, an electrical apparatus control system, home background music, a home theater system, an intercom system, or video surveillance), a smart transportation device (for example, a car, a ship, a drone, a train, a truck, or a truck), a smart manufacturing device (for example, a robot, industrial equipment, smart logistics, or a smart factory), a smart terminal (a mobile phone, a computer, a tablet computer, a palmtop computer, a desktop computer, a headset, an acoustic device, a wearable device, an in-vehicle device, a virtual reality device, an augmented reality device, or the like), a battery management system, and a battery.

As an example rather than a limitation, in this embodiment of this application, the wearable device may also be referred to as a wearable intelligent device, and is a generic term for wearable devices that are developed by applying a wearable technology to use intelligent design in daily wear, for example, glasses, a glove, a watch, clothing, and footwear. The wearable device is a portable device that is directly worn on a user or integrated into clothes or accessories worn by a user. The wearable device is not only a hardware device, but can also implement a powerful function through software support, data exchange, and cloud interaction. In a broad sense, the wearable intelligent device is full-featured, large-size, and can implement all or some functions without depending on a smartphone, and may be a smart watch, smart glasses, or the like; or focuses on a specific type of application functions and needs to be used with another device, for example, a smartphone, and may be various types of smart bands and smart accessories for vital sign monitoring.

In embodiments of this application, "example", "for example", or the like is used to represent giving an example, an illustration, or a description. Any embodiment or design scheme described as an "example" or with "for example" in this application should not be explained as being more preferred or having more advantages than another embodiment or design scheme. Precisely, use of "example", "for example", or the like is intended to present a relative concept in a specific manner.

In embodiments of this application, "at least one" means one or more, and "plurality of" means two or more. "At least one of the following items (pieces)" or a similar expression thereof means any combination of these items, including any combination of singular items (pieces) or plural items (pieces). For example, at least one of a, b, and c may represent a, b, or c; a and b; a and c; b and c; or a, b, and c. a, b, and c may be single or plural. "and/or" describes an association relationship between associated objects, and indicates that three relationships may exist. For example, A and/or B may indicate the following three cases: only A exists, both A and B exist, and only B exists, where A and B may be singular or plural. The character "/" usually indicates an "or" relationship between associated objects.

In addition, unless contrarily stated, ordinal numbers such as "first" and "second" used in embodiments of this application are used to distinguish between a plurality of objects, but are not used to limit an order, a time sequence, priorities, or importance of the plurality of obj ects. For example, a first device and a second device are merely for ease of description, and do not indicate a difference between the first device and the second device in terms of a structure and a degree of importance. In some embodiments, the first device and the second device may alternatively be the same device.

Based on the context, the term "when" used in the foregoing embodiments may be interpreted as having the meaning of "if", "after", "in response to determining", or "in response to detecting". The foregoing descriptions are merely optional embodiments of this application, and are not intended to limit this application. Any modification, equivalent replacement, or improvement made without departing from the conception and principle of this application shall fall within the protection scope of this application.

Persons of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. Persons skilled in the art may use different methods to implement the described functions for each particular application, but it should not be considered that the implementation goes beyond the scope of this application.

In several embodiments provided in this application, it should be understood that the disclosed apparatus and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual coupling, direct coupling, or communication connection may be implemented through some interfaces. The indirect coupling or the communication connection between the apparatuses or units may be implemented in electronic, mechanical, or another form.

The units described as separate parts may or may not be physically separate, and parts displayed as units may or may not be physical units, and may have one location, or may be distributed over a plurality of network units. All or some of the units may be selected based on an actual requirement, to achieve the objectives of the solutions of embodiments.

In addition, the functional units in embodiments of this patent application may be integrated into one processing unit, each of the units may exist alone physically, or two or more units are integrated into one unit.

The foregoing descriptions are merely specific implementations of this application, but are not intended to limit the protection scope of this application. Any variation or replacement readily figured out by persons skilled in the art within the technical scope disclosed in this application shall fall within the protection scope of this application. Therefore, the protection scope of this application shall be subject to the protection scope of the claims.

## Claims

1. A communication method, wherein the method comprises:
obtaining first information of a first node in a first communication system, wherein the first information comprises status information of the first node and/or status information of a first link, and the first node is an end of the first link; and
sending the first information to a first functional entity in a second communication system in a first manner.

2. The method according to claim 1, wherein the method further comprises:
receiving control policy information from the first functional entity, wherein the control policy information is used to configure the first node.

3. The method according to claim 2, wherein the control policy information comprises one or more of the following: node status update information, quality of service QoS policy configuration information, a node status report policy, or a link status detection policy.

4. The method according to claim 3, wherein the node status report policy comprises one or more of the following: an object to be reported, a report periodicity, or an event parameter.

5. The method according to claim 3, wherein the link status detection policy comprises one or more of the following: an object to be measured, an object to be reported, a report threshold, a report periodicity, or an event parameter.

6. The method according to any one of claims 1 to 5, wherein the method further comprises:
receiving sending manner indication information, wherein the sending manner indication information indicates the first manner.

7. The method according to any one of claims 1 to 6, wherein the first manner is a control plane sending manner; and
the sending the first information to a first functional entity in a second communication system in a first manner comprises:
sending a non-access stratum NAS message to a second functional entity in the second communication system, wherein the NAS message comprises the first information.

8. The method according to any one of claims 1 to 6, wherein the first manner is a user plane sending manner based on the first functional entity; and
the sending the first information to a first functional entity in a second communication system in a first manner comprises:
establishing an internet protocol IP connection to the first functional entity in the second communication system based on network identifier information of the first functional entity; and
sending the first information to the first functional entity through the IP connection.

9. The method according to claim 8, wherein the method further comprises:
sending a first request to a second functional entity in the second communication system, wherein the first request is used to request for the network identifier information of the first functional entity; and
receiving the network identifier information of the first functional entity from the second functional entity.

10. The method according to claim 8 or 9, wherein the sending the first information to the first functional entity through the IP connection comprises:
sending the first information to the first functional entity according to a user plane data transmission protocol through the IP connection.

11. The method according to any one of claims 1 to 6, wherein the first manner is a performance measurement function PMF user plane sending manner; and
the sending the first information to a first functional entity in a second communication system in a first manner comprises:
sending the first information to a PMF unit of a third functional entity in the second communication system based on network identifier information of the PMF unit.

12. The method according to claim 11, wherein the method further comprises:
sending a second request to a second functional entity in the second communication system, wherein the second request is used to request for the network identifier information of the PMF unit; and
receiving the network identifier information of the PMF unit from the second functional entity.

13. The method according to claim 11, wherein the sending the first information to a PMF unit comprises:
sending an end-to-end round-trip time RTT detection request message and/or a packet loss rate detection request message to the PMF unit, wherein the end-to-end round-trip time RTT detection request message or the packet loss rate detection request message comprises the first information.

14. The method according to any one of claims 1 to 13, wherein the status information of the first node comprises one or more of the following: hardware version information, software version information, or node power information.

15. The method according to any one of claims 1 to 14, wherein the status information of the first link comprises a first status measurement quantity and/or a second status measurement quantity, the first status measurement quantity is a measurement quantity of a status of a link between the first node and a grant node of the first node, and the second status measurement quantity is measurement quantity of a status of a link between the first node and the second communication system.

16. The method according to claim 15, wherein the first status measurement quantity comprises one or more of the following: a reference signal received power RSRP, reference signal received quality RSRQ, a signal-to-interference plus noise ratio SINR, a channel quality indicator CQI value, a precoding matrix indicator PMI value, or a rank indicator RI value.

17. The method according to claim 15, wherein the second status measurement quantity comprises one or more of the following: an end-to-end round-trip time RTT, a packet loss rate, or a jitter amount.

18. A communication method, wherein the method comprises:
receiving first information of a first node in a first communication system, wherein the first information comprises status information of the first node and/or status information of a first link, and the first node is an end of the first link; and
sending the first information to a first functional entity in a second communication system.

19. The method according to claim 18, wherein the method further comprises:
receiving control policy information from the first functional entity, wherein the control policy information is used to configure the first node; and
sending the control policy information to the first node.

20. The method according to claim 18 or 19, wherein the receiving first information of a first node in a first communication system comprises:
receiving a NAS message from the first node, wherein the NAS message comprises the first information.

21. The method according to any one of claims 18 to 20, wherein the method further comprises:
receiving a first request from the first node, wherein the first request is used to request for network identifier information of the first functional entity; and
sending the network identifier information of the first functional entity.

22. The method according to any one of claims 18 to 21, wherein the method further comprises:
receiving a second request from the first node, wherein the second request is used to request for network identifier information of a PMF unit of a third functional entity in the second communication system; and
sending the network identifier information of the PMF unit.

23. A communication method, wherein the method comprises:
receiving first information from a first node, wherein the first information comprises status information of the first node and/or status information of a first link, and the first node is an end of the first link;
determining control policy information of the first node based on the first information, wherein the control policy information is used to configure the first node; and
sending the control policy information.

24. The method according to claim 23, wherein the control policy information comprises one or more of the following: node status update information, quality of service QoS policy configuration information, a node status report policy, or a link status detection policy.

25. The method according to claim 24, wherein the node status report policy comprises one or more of the following: an object to be reported, a report periodicity, or an event parameter.

26. The method according to claim 24, wherein the link status detection policy comprises one or more of the following: an object to be measured, an object to be reported, a report threshold, a report periodicity, or an event parameter.

27. The method according to any one of claims 23 to 26, wherein the method further comprises:
sending sending manner indication information, wherein the sending manner indication information indicates a first manner, and the first manner is a manner of sending the first information.

28. The method according to any one of claims 23 to 27, wherein the status information of the first node comprises one or more of the following: hardware version information, software version information, or node power information.

29. A communication apparatus, comprising at least one processor and a communication interface, wherein the communication interface provides information input or information output for the at least one processor, and the at least one processor is configured to execute a program or instructions, to enable the communication apparatus to implement the communication method according to any one of claims 1 to 17, the communication method according to any one of claims 18 to 22, or the communication method according to any one of claims 23 to 28.

30. A terminal, wherein the terminal comprises the communication apparatus according to claim 29.

31. A computer-readable storage medium, wherein the computer-readable storage medium stores a computer program, and the computer program is executed by a processor to implement the communication method according to any one of claims 1 to 17, the communication method according to any one of claims 18 to 22, or the communication method according to any one of claims 23 to 28.

32. A computer program product, wherein when the computer program product is run on a computer, the computer is enabled to implement the communication method according to any one of claims 1 to 17, the communication method according to any one of claims 18 to 22, or the communication method according to any one of claims 23 to 28.
